# EUROPÄISCHE PATENTSCHRIFT

(11) **EP 2 771 699 B1**
(45) Veröffentlichungstag und Bekanntmachung des Hinweises auf die Patenterteilung: **07.04.2021**
(21) Anmeldenummer: 12794858.6
(22) Anmeldetag: 29.10.2012
(51) Int. Cl.: G01N 35/10, G01F 23/292

(54) **VERFAHREN UND VORRICHTUNG ZUR KONTROLLE DES VOLUMENS UND DER ZUSAMMENSETZUNG MINDESTENS EINER PROBE**
METHOD AND DEVICE FOR INSPECTING THE VOLUME AND THE COMPOSITION OF AT LEAST ONE SAMPLE
PROCÉDÉ ET DISPOSITIF DE CONTRÔLE DU VOLUME ET DE LA COMPOSITION D'AU MOINS UN PRÉLÈVEMENT

(30) Priorität: 28.10.2011 DE 102011117310; 28.10.2011 DE 102011117323; 26.10.2012 WO PCT/EP2012/004491
(43) Veröffentlichungstag der Anmeldung: 03.09.2014
(73) Patentinhaber: Aeneas GmbH & Co. KG, 55234 Wendelsheim (DE)
(72) Erfinder: SCHIMON, Hans-Peter, 73092 Heiningen (DE); BLECKEN, Jens, 55546 Fürfeld (DE); WULF, Markus, 55232 Alzey (DE)
(74) Vertreter: Pösentrup, Judith
(86) Internationale Anmeldenummer: PCT/EP2012/004528
(87) Internationale Veröffentlichungsnummer: WO 2013/060483

(56) Entgegenhaltungen:
- EP-A1- 2 133 668
- DE-A1- 10 215 270
- US-A1- 2007 021 929

## Beschreibung

Die Erfindung betrifft ein Verfahren und eine Vorrichtung zur Kontrolle des Volumens und/oder der Zusammensetzung mindestens einer, insbesondere fluidenProbe, wobei in mindestens einer Pipette zwischen mindestens einer Probe und mindestens einem an die mindestens eine Probe angrenzenden Fluid eine mindestens eine Grenzfläche ausgebildet wird und in mindestens einer zweiten Pipette zwischen mindestens einer zweiten, insbesondere fluiden Probe und mindestens einem an die mindestens zweite Probe angrenzenden zweiten Fluid eine mindestens zweite Grenzfläche ausgebildet wird. Die Erfindung betrifft ferner die Verwendung einer Kamera mit einer Markierung im Bildfeld der Kamera zum Durchführen eines solchen Verfahrens.

In DE 10 2008 022 835 B3 ist eine Vorrichtung als Analysegerät zum Untersuchen von biologischen oder chemischen Proben mittels einer über eine Pipette zugeführten Reagenzflüssigkeit beschrieben. Auf einer Grundplatte ist eine Arbeitsplatte drehbar gelagert horizontal angeordnet zur Aufnahme der Proben in einen Probenhalter, beispielsweise eine Mikrotiterplatte, die mehrere Näpfchen zur Aufnahme der Proben aufweist. Die Näpfchen werden auch als Vertiefungen, Kavitäten oder Wells, gelegentlich auch als Tröpfchen, bezeichnet. Oberhalb der Arbeitsplatte ist ein Robotermanipulator angeordnet, der einen horizontalen Tragarm mit einem Schlitten trägt, wobei an dem Schlitten ein in vertikaler Richtung bewegliches Nadelsystem befestigt ist. Das Nadelsystem umfasst mehrere Hohlnadeln als Pipetten, die gleichzeitig über einen einzelnen Well zum Stehen kommen, wobei eine der Hohlnadeln eine Reagenzflüssigkeit in den Well einfüllt. Nach einer Reaktionszeit bzw. Inkubationszeit wird die Lösung aus einer in dem Well befindlichen Probe und der zugeführten Reagenzflüssigkeit mittels einer zweiten Hohlnadel abgesaugt und mittels einer dritten Hohlnadel mit einer Waschlösung versehen und darauf folgend mit der zweiten Hohlnadel abgesaugt. Mit den drei Hohlnadeln wird also ein einzelner Well mit Reagenzflüssigkeit und Waschlösung befüllt. Das Analysegerät enthält selbst keine Elemente zur Auswertung der Näpfchen bzw. Wells, wobei diese in einem späteren Schritt von einem Fachmann ausgewertet werden. Die Proben sind zur späteren Analyse mit Barcodes gekennzeichnet, wobei das Analysegerät in seinem hinteren Teil eine Vorrichtung zum Lesen der Barcodes aufweist. Die Proben erfahren bei Reaktion mit der Reagenzflüssigkeit einen Farbumschlag und/oder eine Fluoreszenz, der/die mittels eines Photometers zur Farbmessung analysiert und/oder ausgewertet werden kann

EP 2 133 668 A1 zeigt eine Pipettiervorrichtung mit einer Kamera, wobei durch einen Vergleich der (bekannten) Breite der Pipette mit der Position der Grenzfläche der Füllstand bestimmt wird.

US 2007/021929 A1 beschreibt die Bestimmung der Zusammensetzung einer Probe in einer Pipette mittels einer Kamera.

Aufgrund der Vielzahl herzustellender Lösungen aus einer Probe und einer Reagenzflüssigkeit, die im Rahmen ganzer Testserien herzustellen sind, ist es erforderlich, diese Lösungen mit hoher Prozessgeschwindigkeit unter stabilen Prozessbedingungen und unter Verwendung möglichst geringer Mengen für die Probe und die Reagenzflüssigkeit herzustellen. Außerdem sollte die Beschickung der Wells in möglichst einfacher Weise aus Kostengründen erfolgen. Das oben beschriebene Analysegerät ist insofern nachteilig, als dass das Nadelsystem mit drei Nadeln als Pipetten lediglich eine Reagenzflüssigkeit in der zu pipettierenden Menge einem Well zuführt und die zu pipettierende Menge über einen der ersten Nadel zugeordneten Antrieb eingestellt wird, der die erforderliche Prozessgenauigkeit hinsichtlich der einzustellenden Menge nur in begrenztem Umfang gewährleistet.

Die Aufgabe der Erfindung liegt daher in der Vermeidung der Nachteile des Standes der Technik, wobei die Herstellung von Lösungen aus jeweils einer Probe und einem Fluid, beispielsweise in Form einer Reagenz oder Verdünnungsflüssigkeit, unter Verwendung möglichst geringer Mengen für die Probe und das Fluid bei hoher Prozessgeschwindigkeit erfolgen soll.

Diese Aufgabe wird mit einem Verfahren nach Anspruch 1, einer Verwendung einer Kamera nach Anspruch 10 und einer Vorrichtung nach Anspruch 11 gelöst. Vorteilhafte Weiterbildungen der Erfindung sind Gegenstand der abhängigen Ansprüche.

Das erfindungsgemäße Verfahren zur Kontrolle eines Volumens und/oder einer Zusammensetzung mindestens einer, insbesondere fluiden Probe umfasst, das Bereitstellen mindestens einer Pipette, in der zwischen mindestens einer Probe und mindestens einem an die mindestens eineProbe angrenzenden Fluid mindestens eine Grenzfläche ausgebildet wird, die außerhalb der Pipette jeweils als im Wesentlichen horizontal verlaufende Grenzlinie zwischen mindestens einen Probe und dem mindestens einen Fluid optisch wahrnehmbar ist, das Anordnen mindestens einer Markierung einer Kamera in einem Bildfeld der Kamera derart, dass die mindestens eine Markierung und mindestens ein erster Abschnitt der mindestens einen Pipette auf einem aufgenommenen Bild abgebildet werden, wobei die mindestens eine Pipette derart zwischen einer Lichtquelle und der Kamera angeordnet ist, dass mindestens ein Spektrum von Lichtstrahlen der Lichtquelle von der Kamera aufgenommen wird, welche die mindestens eine Probe durchquert haben, das Auswerten, ob die mindestens eine Markierung im aufgenommenen Bild mit der Lage der mindestens einen Grenzlinie in dem mindestens ersten Abschnitt übereinstimmt, das Vergleichen mindestens eines aufgenommen Spektrums mit mindestens einem Referenzspektrum, und das Feststellen, ob die Zusammensetzung der mindestens einen Probe gemäß dem mindestens einen aufgenommenen Spektrum dem mindestens einen Referenzspektrums entspricht.

Eine weitere Ausführungsform des erfindungsgemäßen Verfahrens zur Kontrolle des Volumens und/oder der Zusammensetzung der mindestens einenProbe umfasst das Bereitstellen mindestens einer mindestens Pipette, in der zwischen der mindestens einen Probe und mindestens einem an die mindestens eine Probe angrenzenden Fluid mindestens eine Grenzfläche ausgebildet wird, die außerhalb der Pipette jeweils als im Wesentlichen horizontal verlaufende Grenzlinie zwischen der mindestens einen Probe und dem mindestens einen Fluid optisch wahrnehmbar ist. Weiter umfasst das Verfahren ein Bereitstellen mindestens einer zweiten Pipette, in der zwischen mindestens einer zweiten, insbesondere fluiden Probe und mindestens einem an die mindestens zweite Probe angrenzenden zweiten Fluid mindestens eine zweite Grenzfläche ausgebildet wird, die außerhalb der mindestens zweiten Pipette jeweils als im Wesentlichen horizontal verlaufende mindestens zweite Grenzlinie zwischen der mindestens zweiten Probe und dem mindestens zweiten Fluid optisch wahrnehmbar ist. Das Verfahren umfasst weiter ein Anordnen mindestens einer Markierung einer Kamera in einem Bildfeld der Kamera derart, dass die mindestens eine Markierung, mindestens ein Abschnitt der mindestens einen Pipette und mindestens ein zweiter Abschnitt der mindestens zweiten Pipette auf einem aufgenommenen Bild abbildbar sind, und ein Auswerten, ob in dem aufgenommenen Bild die mindestens eine Markierung auf Höhe der mindestens einen Grenzlinie in dem mindestens einen Abschnitt und der mindestens zweiten Grenzlinie in dem mindestens zweiten Abschnitt liegt. Durch den Einsatz einer Kamera mit einer Markierung, die im Bildfeld der Kamera angeordnet ist, kann die Lage zumindest einer der ersten Grenzlinie in dem ersten Abschnitt und der zweiten Grenzlinie in dem zweiten Abschnitt und damit die Position der ersten Probe innerhalb der ersten Pipette und/oder der zweiten Probe innerhalb der zweiten Pipette genau bestimmt werden. Da auf einem mit der Kamera aufgenommenen Bild neben der Markierung ein Abschnitt der mindestens einen Pipette und der mindestens zweiten Pipette abgebildet sind, besteht die Möglichkeit, dass auf dem aufgenommenen Bild die mindestens eine und/oder die mindestens zweite Grenzlinie abgebildet sind. In diesem Fall kann, beispielsweise mittels eines Vergleichs des aufgenommenen Bildes mit einem oder mehreren Referenzbildern, ausgewertet werden, ob die Markierung auf Höhe der ersten und/oder zweiten Grenzlinie liegt. Die Markierung, die lediglich im Bildfeld der Kamera vorliegt und nicht in einer als Bild aufzunehmenden Umgebung vorliegen muss, kann neben anderen Varianten als im Wesentlichen horizontal verlaufender Kontrollstrich, als Kontrollpunkt, Kontrollfleck oder Kontrollkreuz ausgebildet sein, der/das dann auf Höhe der ersten und/oder zweiten Grenzlinie liegt, wenn die erste und/oder zweite Grenzlinie mit dem Kontrollstrich fluchtet. Bei einem Vergleich des aufgenommenen Bildes mit einem Referenzbild kann dieser Vergleich beispielsweise dadurch erfolgen, dass die Helligkeitsstufen unterschiedlicher Pixel des aufgenommenen Bildes mit Helligkeitsstufen unterschiedlicher Pixel des Referenzbildes, die sich an entsprechenden Positionen auf dem aufgenommenen Bild und dem Referenzbild befinden, miteinander verglichen werden und bei Übereinstimmung der Helligkeitsstufen in einem vorgegebenen Wertebereich eine Übereinstimmung der Helligkeitsstufen der verglichenen Pixel festgestellt wird. Dieser Musterabgleich zwischen dem aufgenommenen Bild und dem Referenzbild kann in automatisierter Form über einen PC (Personal Computer) erfolgen. Falls die erste Probe zu dem ersten Fluid und/oder die zweite Probe zu dem zweiten Fluid einen hohen Kontrast aufweisen/aufweist und die erste und/oder zweite Grenzlinie im aufgenommenen Bild in hoher Qualität abgebildet sind/ist, kann alternativ oder zusätzlich zu einem Vergleich dieses Bildes mit einem Referenzbild die Auswertung anhand eines fest vorgegebenen Auswahlkriteriums erfolgen, beispielsweise anhand einer vorgegebenen Anzahl von in einer Richtung aneinander grenzender Pixel zwischen der Markierung und der ersten und/oder zweiten Grenzlinie.

Da Abschnitte beider Pipetten auf einem aufgenommenen Bild abgebildet werden, wobei die erste Pipette die erste Probe und die zweite Pipette die zweite Probe umfasst, kann für den Fall, dass auf keinem aufgenommenen Abschnitt eine von außerhalb der Pipetten sichtbare Grenzlinie abgebildet ist, ausgewertet werden, ob die erste Probe in dem ersten Abschnitt und/oder die zweite Probe in dem zweiten Abschnitt vorhanden sind/ist, beispielsweise mittels Mustervergleich oder anhand einem vorgegebenen Auswahlkriteriums. Als Auswahlkriterium kommt ein für die Probe charakteristischer Farbwert in Betracht, der von der Kamera erfasst werden kann, da die Pipette zumindest teilweise transparent ist. Bei einem negativen Ergebnis der Auswertung, ob in dem aufgenommenen Bild die Markierung auf Höhe zumindest einer der ersten und zweiten Grenzlinien liegt, kann also bestimmt werden ob in dem ersten Abschnitt die erste Probe und/oder in dem zweiten Abschnitt die zweite Probe vorliegen/vorliegt.

Bei einer Abbildung der ersten Grenzlinie und/oder der zweiten Grenzlinie zusammen mit der Markierung ist es darüber hinaus möglich, mit lediglich einem aufgenommenen Bild festzustellen, ob sich die Grenzlinie zumindest einer der der ersten und zweiten Proben an einer vorgegebenen Position in Längsrichtung zumindest einer der ersten und zweiten Pipetten befindet. Hierdurch kann ein Füllstand der ersten Probe in der ersten Pipette und/oder der zweiten Probe in der zweiten Pipette bestimmt werden, wodurch das Volumen zumindest einer der ersten und zweiten Proben kontrolliert werden kann. Durch die Kontrolle mehrerer Volumina unterschiedlicher Proben kann die Prozessgeschwindigkeit bei der Herstellung von Lösungen, die diese Proben umfassen, erhöht werden. Weiter wird über die Aufnahme des Bildes der Markierung und der gegebenenfalls zwei Grenzlinien ein definierter Zeitpunkt für die Kontrolle der Volumina der ersten Probe und der zweiten Probe festgelegt. Sofern die vorgegebenen Volumina für die erste Probe und die zweite Probe mittels des erfindungsgemäßen Kontrollverfahrens kontrolliert sind, stehen diese unmittelbar danach zur weiteren Analyse bzw. Verarbeitung, beispielsweise durch einen Übertrag der beiden Proben in benachbarte Wells einer Mikrotiterplatte, zur Verfügung.

Erfindungsgemäß ist bei dem Verfahren weiter vorgesehen, dass die Pipette derart zwischen einer Lichtquelle und der Kamera angeordnet ist, dass ein Spektrum von Lichtstrahlen der Lichtquelle von der Kamera aufgenommen werden kann, welche die Probe durchquert haben. In diesem Fall umfasst die Auswerteeinrichtung, welche die Markierung im aufgenommenen Bild mit der Lage der Grenzlinie vergleicht, zusätzliche Mittel, welche das aufgenommene Spektrum mit einem Referenzspektrum vergleicht und feststellt, ob die Zusammensetzung der Probe gemäß dem aufgenommenen Spektrum dem des Referenzspektrums entspricht.

Bei dem erfindungsgemäßen Verfahren zur Kontrolle des Volumens und/oder der Zusammensetzung mindestens einer, insbesondere fluidenProbe ist/sind vorzugsweise die Pipette(n) derart zwischen einer Lichtquelle und der Kamera angeordnet, dass jeweils ein Spektrum von Lichtstrahlen der Lichtquelle von der Kamera aufgenommen wird, welche einen Meniskus und/oder einen Probenteil direkt unterhalb des Meniskus der Probe/n durchquert haben, der an einem Rand der Grenzfläche zu einer Innenwand der Pipette(n) ausgebildet ist/sind, das/die aufgenommene(n) Spektrum/Spektren wird/werden mit einem/mehreren Referenzspektrum/Referenzspektren verglichen und es wird festgestellt, ob die Zusammensetzung der Probe/n gemäß dem/der aufgenommenen Spektrums/Spektren dem/den des/der Referenzspektrums/Referenzspektren entspricht. Erfindungsgemäß wird unter der Bezeichnung "direkt unterhalb des Meniskus" mindestens die Höhe des 0,5-fachen, insbesondere des 1,0-fachen und vorzugsweise des 1,5-fachen des Meniskuses, und höchstens die Höhe des 3-fachen bzw. 4-fachen, insbesondere des 5-, 6-, 7-, 8-fachen, besonders bevorzugt des 10-fachen der Höhe des Meniskus verstanden.

Bei dem erfindungsgemäßen Verfahren zur Kontrolle des Volumens und/oder der Zusammensetzung mindestens einer, insbesondere fluiden Probe wird vorzugsweise mittels eines Vergleichs des/der aufgenommen Spektrums/Spektren mit einem/mehreren Referenzspektrum/Referenzspektren festgestellt, ob in der/den Probe/n hämolytische und/oder lipämische Faktoren vorhanden sind.

Erfindungsgemäße Probensubstanzen sind beispielsweise Blut, Serum und/oder Zellflüssigkeit. Andere Substanzen für die Probe, die als biologische oder chemische Probe vorliegen kann, sind möglich. Prinzipiell können zudem in der Probe gelöste Stoffe oder nicht gelöste Bestandteile der Probe, beispielsweise Verunreinigungen, auf diese Weise bestimmt werden.

Bevorzugt wird die Auswertung der Zusammensetzung der Probe dazu verwendet, festzustellen, ob in der Probe hämolytische und/oder lipämische Faktoren vorhanden sind.

Bei Verwendung von Serum oder Plasma kann auf diese Weise festgestellt werden, ob die Tests durch Lipide, Hämoglobin oder Bilirubin gestört werden. Interferenzen in erhöhten Mengen (Lipide bis zu 20 mg/mL, Hämoglobin bis zu 800 µg/mL, Bilirubin bis zu 200 µg/mL) können die Reaktionskinetik stören und verfälschen die Ergebnisse. Bei Proben mit lipämischen Bestandteilen kommen die Verfälschungen zum Teil dadurch zustande, dass die auf der Oberfläche der Proben schwimmenden Fette und/oder Lipide, welche ggf. cholesterin reiche Bestandteile enthalten, anstelle des Serums oder des Plasmas mittels der Pipette zur Volumenbestimmung vermehrt angesaugt werden. Dies kann dann zu einer Volumenverfälschung der zu bestimmenden Probe führen und somit das Analyseergebnis stören bzw. verfälschen. Erfindungsgemäß wird aus diesen Gründen die Zusammensetzung einer Probe bevorzugt an der Oberfläche durchgeführt, da sich an der Oberfläche bevorzugt die fett- und/oder lipidhaltigen Schichten abscheiden. Bevorzugt wird dabei die Messung der Zusammensetzung der Probe im Bereich der oberen Grenzlinie der Probe durchgeführt. Erfindungsgemäß ist es ebenso möglich, eine turbidimetrische Messung quer durch die Probe durchzuführen. Ebenso ist es im Sinne der Erfindung möglich, beide Messmethoden zur Bestimmung der Zusammensetzung einer Probe zu kombinieren bzw. nacheinander durchzuführen, um eine erhöhte Kontrollsicherheit zu erzielen. Im Gegensatz zur Störung und/oder Verfälschung der Messung aufgrund von fettreichen Bestandteilen einer Probe stören bzw. beeinflussen hämolytische Bestandteile einer Probe, wenn diese in einer Probe vorhanden sind, die Messung in erster Linier durch ihre roten bzw. braunen Farben und in zweiter Linie dadurch, dass bestimmte Reaktionen durch die hämolytischen Bestandteile gehemmt werden. Erfindungsgemäß ist es deshalb zweckmäßig, eine Bestimmung der Zusammensetzung einer Probe vor oder mit der Kontrolle des Volumens durchzuführen.
Erfindungsgemäß ist es ebenso möglich, mittels einer und/oder beider Messmethoden zur Bestimmung einer Zusammensetzung einer Probe ein Ausflocken der Probe festzustellen.
Durch eine präzisere Kontrolle des Volumens und der Zusammensetzung einer Probe wird ein höheres Maß an Kontrollsicherheit erreicht, was es wiederum ermöglicht, falsch-positive bzw. falsch-negative Proben zuverlässiger auszuschließen.

Durch das aufgenommene Bild wird ein Startzeitpunkt für einen der Kontrolle nachgelagerten Prozessschritt der beiden Proben definiert. Auf diese Weise ist es möglich, die zwei Proben, beispielsweise eine Blindprobe oder eine Vergleichsprobe als erste Probe und eine zu analysierende Probe als zweite Probe exakt unter zeitgleichen Bedingungen in diesen Proben zugeordneten voneinander getrennt angeordneten Wells ablaufen zu lassen. Beispielsweise zu unterschiedlichen Zeitpunkten eintretende Farbumschläge oder auftretende Fluoreszenzen können auf diese Weise unter einfacher vergleichbaren Prozessbedingungen und bei erhöhter Prozessgeschwindigkeit aufgrund einer einheitlichen Zeitbasis ausgewertet werden, die durch den Aufnahmezeitpunkt als Zeitstempel gesetzt ist. Jede der beiden Pipetten kann geeicht sein in der Weise, dass bei Liegen der Markierung auf Höhe der jeweiligen Grenzlinie ein vorbestimmtes Volumen der ersten bzw. zweiten Probe vorliegt, das neben der ersten bzw. zweiten Grenzfläche von einer Spitze der jeweiligen Pipette begrenzt ist. Durch die Eichung der Pipette jeweils in einem Bereich der Pipette, der die Pipettenspitze umfasst, ist es möglich, mit lediglich einem aufgenommenen Bild festzustellen, ob die erste Probe und/oder die zweite Probe ein vorbestimmtes Volumen aufweisen/aufweist. Sofern die Auflösung und Lichtempfindlichkeit der Kamera ausreichen, ist es zudem möglich mehr als zwei Pipetten mit Proben abschnittsweise zu einem Zeitpunkt in einem Bild aufzunehmen. Das aufgenommene Bild kann beispielsweise mit einer elektronischen Matrix Kamera, insbesondere einer CCD (Charge Coupled Device) oder CMOS (Complementary Metal Oxid Semiconductor)-Kamera, erhalten werden. Eine andere Vorrichtung zur Bildaufnahme ist möglich, sofern deren Auflösung, Brennweite, Apertur, Tiefenschärfe und Lichtempfindlichkeit eine zur Auswertung ausreichende Bildqualität gewährleisten.

In einer bevorzugten Ausführung wird das erste Fluid als Gasblase, insbesondere Luftblase ausgebildet. In der ersten Pipette wird diese Gasblase zwischen der ersten Probe und einem an die Gasblase angrenzenden weiteren Fluid angeordnet, wobei eine zwischen dem weiteren Fluid und der Gasblase ausgebildete weitere Grenzfläche außerhalb der Pipette als im Wesentlichen horizontal verlaufende weitere Grenzlinie zwischen dem weiteren Fluid und der Gasblase optisch wahrnehmbar ist. Durch die Gasblase wird ein unerwünschtes Mischen der ersten Probe mit dem weiteren Fluid vermieden. Auf diese Weise können in nur einer Pipette mehrere zu analysierende oder zu verwendende Flüssigkeiten aufgenommen und abgegeben werden. Beispielsweise können sowohl die erste Probe als auch das weitere Fluid Flüssigkeiten sein, die nacheinander in einen einzigen Well oder in unterschiedliche Wells ausgestoßen werden sollen. Das weitere Fluid kann anstelle einer weiteren Probe auch als Verdünnungs- oder Vergleichsfluid zur Verdünnung der Probe bzw. zu einem Vergleich mit der Probe vorliegen. Es hat sich gezeigt, dass bei Aufnahme eines Bildes mit zumindest zwei Grenzflächen, die in einer und/oder unterschiedlichen Pipetten ausgebildet sei können, es für eine hohe Bildqualität von Vorteil ist, wenn das aufgenommene Bild aus zumindest zwei Teilbildern zusammengesetzt wird. Hierbei umfasst das erste Teilbild einen ersten Abschnitt der ersten Pipette, der eine erste Spitze der ersten Pipette und die erste Grenzlinie und einen zweiten Abschnitt der zweiten Pipette mit einer zweiten Spitze der zweiten Pipette einschließt. Auf einem zweiten Teilbild ist ein dritter Abschnitt der ersten Pipette mit der weiteren Grenzlinie abgebildet. Durch das Auseinanderfallen der Abbildung der ersten Grenzlinie und der weiteren Grenzlinie in der ersten Pipette auf das erste Teilbild und das zweite Teilbild ist sichergestellt, dass die Gasblase sozusagen als "Schnittstelle" zwischen dem ersten Teilbild und dem zweiten Teilbild dient, wobei sich die beiden Teilbilder vorzugsweise überlappen. Da in Längsrichtung der Pipette zwischen der ersten Grenzlinie und der dritten Grenzlinie keine weitere Grenzlinie vorhanden ist, die auszuwerten sein könnte, wird der Abschnitt in der Gasblase zwischen der ersten Grenzlinie und der dritten Grenzlinie als Kante des ersten Teilbildes verwendet. Da in dem ersten Teilbild die erste Grenzlinie und in dem zweiten Teilbild die dritte Grenzlinie abgebildet sind, kann in dem zusammengesetzten aufgenommenen Bild unter optimierten kameraoptischen Bedingungen für die erste Grenzlinie und die dritte Grenzlinie bestimmt werden, ob die erste Grenzlinie und die dritte Grenzlinie auf Höhe der (jeweiligen) Markierung liegen. Da auf dem zusammengesetzten Bild auch der zweite Abschnitt der zweiten Pipette und damit gegebenenfalls die zweite Grenzlinie, die in der zweiten Pipette verläuft, abgebildet ist, können mittels nur einem aufgenommenen Bild die Volumina von drei Proben in zwei Pipetten kontrolliert werden. Falls nicht nur in der ersten Pipette, sondern auch in der zweiten Pipette eine Gasblase derart vorliegt, dass die Probe in dieser Pipette von einem weiteren Fluid getrennt aufgezogen werden kann, können über lediglich ein aufgenommenes Bild vier Fluide in zwei Pipetten hinsichtlich ihrer Volumina kontrolliert werden, wobei die erste Probe und die zweite Probe jeweils als Fluid vorliegen. Es bietet sich insbesondere dann an, das Bild aus zwei separat mit der Kamera aufgenommenen Teilbildern zusammenzusetzen, falls die Tiefenschärfe der Kamera nicht ausreicht um sowohl die erste Grenzlinie zwischen der ersten Probe und der Gasblase als auch die dritte Grenzlinie zwischen Gasblase und drittem Fluid in zur Auswertung ausreichender optischer Qualität auf dem aufgenommenen Bild abzubilden.

Eine in dem ersten Teilbild abgebildete Grenzlinie und eine in dem zweiten Teilbild abgebildete weitere Grenzlinie in einer oder in unterschiedlichen Pipetten können vorteilhaft prinzipiell immer dann zu einem aufgenommenen Bild zusammengesetzt werden, wenn die Grenzlinien vertikal soweit voneinander beabstandet sind, dass ein optischer Parameter der Kamera, beispielsweise dessen Tiefenschärfe, Auflösung oder Bildfeldbereich konstanter Brennweite nicht mehr ausreicht um beide Grenzlinien auswertbar abzubilden. Daher wird in einer weiteren Ausführungsform das aufgenommene Bild zusammengesetzt aus mit der Kamera aufgenommenen Teilbildern, wobei auf einem ersten Teilbild ein erster Abschnitt der ersten Pipette, der eine erste Spitze der ersten Pipette und die erste Grenzlinie einschließt, und ein zweiter Abschnitt der zweiten Pipette mit einer zweiten Spitze der zweiten Pipette abgebildet sind, und auf dem zweiten Teilbild ein vierter Abschnitt der zweiten Pipette mit der zweiten Grenzlinie abgebildet ist. Auf diese Weise kann im zusammengesetzten Bild die im zweiten Teilbild abgebildete zweite Grenzlinie in der zweiten Pipette auf die im ersten Teilbild abgebildete Spitze dieser Pipette bezogen werden.

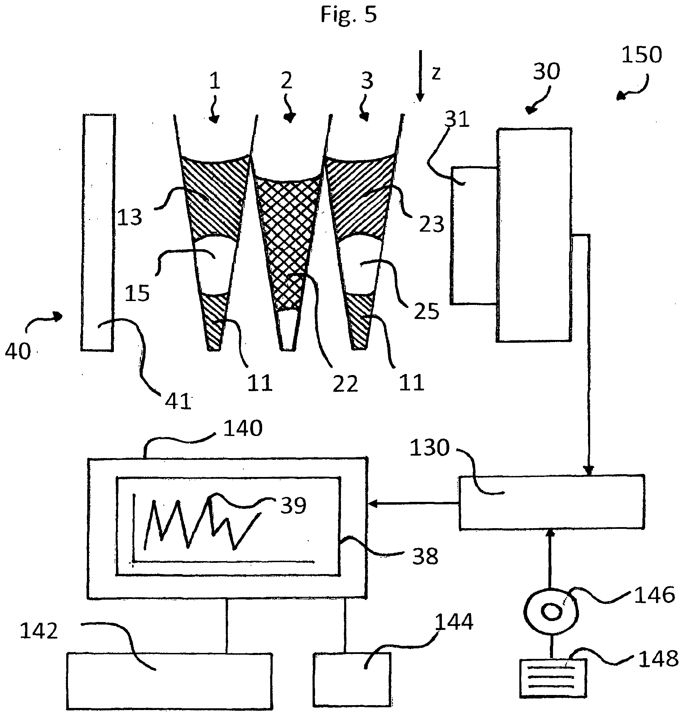

Bei vorliegender konischen Form der Pipetten im Bereich der Pipettenspitze und paralleler Ausrichtung der Längsachsen beider Pipetten sowie auf gleicher Höhe liegender Spitzen der beiden Pipetten ist es zudem möglich alternativ oder zusätzlich zu zusammengesetzten Teilbildern die Pipetten zu dem Objektiv der Kamera so auszurichten, dass die dem Objektiv zugewandten Enden von Grenzlinien in der ersten und/oder zweiten Pipette gleiche oder ähnliche Abstände zum Objektiv aufweisen. In diesem Fall stehen nicht die Längsachsen der Pipetten, sondern die dem Objektiv zugewandte Außenkanten der Pipetten im Wesentlichen senkrecht zur optischen Achse des Objektivs bzw. der Kamera und die dem Objektiv zugewandten Enden der Grenzlinien weisen gleiche oder ähnliche Abstände zu einem Schnittpunkt der optischen Achse mit der dem Objektiv zugewandte Außenkante der Pipette auf, in der die jeweilige Grenzlinie angeordnet ist. Eine Drehung der Längsachsen der Pipetten zur optischen Achse um einen halben Konuswinkel kann erfolgen, indem die Pipetten zum Objektiv oder das Objektiv zu den Pipetten gedreht werden/wird, beispielsweise über einen computergesteuerten Elektromotor. Ein aus Teilbildern zusammengesetztes aufgenommenes Bild und/oder eine Drehung der Längsachse der Pipette zur optischen Achse um einen halben Konuswinkel können/kann nicht nur bei Aufnahme eines Bildes von Abschnitten zweier Pipetten, sondern schon bei einer Aufnahme eines Bildes von einer Pipette erfolgen. An dieser Stelle wird auf die Offenbarung in der parallelen deutschen Patentanmeldung der Anmelderin dieser Anmeldung mit dem Aktenzeichen DE 10 2011 117 310.6 und internem Aktenzeichen AES 80204, auf Beschreibungsseite 9, 10, 13, 21-24 und in den Figuren 5 und 6 verwiesen, in der ein aus Teilbildern zusammengesetztes aufgenommenes Bild und/oder eine Drehung der Längsachse der Pipette zur optischen Achse um einen halben Konuswinkel von lediglich einer Pipette beschrieben sind/ist und die durch Bezugnahme als Offenbarung in die vorliegende Anmeldung mit aufgenommen wird.

Das erste Teilbild und das zweite Teilbild können dadurch aufgenommen werden, dass zumindest eine der ersten und zweiten Pipetten relativ zu dem Bildfeld der Kamera bewegt werden. Die erste Pipette und die zweite Pipette können als Doppelpipette, auch Doppelpipettiermodul genannt, vorliegen, wobei die Pipetten hinsichtlich ihrer Längsachsen zueinander parallel ausgerichtet und konische Abschnitte der Pipetten mit den Pipettenspitzen zu einer gleichen Richtung hin geöffnet sind. Sofern die erste Pipette gegenüber der zweiten Pipette in ihrer Längsrichtung verschiebbar ist, können die Pipettenspitzen gegenüber dem Bildfeld der Kamera horizontal zueinander auf eine gemeinsame Höhe ausgerichtet werden, was die spätere Auswertung nach Aufnahme des Bildes erleichtert. Die Doppelpipette kann getrennte Antriebe für die erste Pipette und die zweite Pipette zum Bewegen eines Fluids in der jeweiligen Pipette umfassen. Auf diese Weise kann ein zeitgleicher Übertrag der Fluide in der ersten Pipette und in der zweiten Pipette auf einen oder unterschiedliche Wells gewährleistet werden. Statt lediglich zwei können auch mehr als zwei Pipetten, die hinsichtlich ihrer Längsachsen zueinander parallel ausgerichtet und bei denen konische Abschnitte der Pipetten mit den Pipettenspitzen zu einer gleichen Richtung hin geöffnet sind und die jeweils über getrennte Antriebe für zweitgleichen Übertrag der in den Pipetten enthaltenen Fluide verfügen, in einer Mehrfachpipette, auch Mehrfachpipettiermodul genannt, zusammengefasst werden

Für den Fall, dass beispielsweise die erste Pipette und die zweite Pipette auf einem gemeinsamen Träger montiert sind, der gegenüber der Kamera beweglich ist, können die erste Pipette und die zweite Pipette (gemeinsam) durch das Bildfeld der Kamera gefahren werden. In dieser bevorzugten Ausführungsform ist die Kamera ortsfest angeordnet und die erste Pipette und die zweite Pipette sind beispielsweise in einem Robotermanipulator angeordnet. Alternativ ist es auch möglich, dass die erste Pipette und die zweite Pipette ortsfest angeordnet sind und eine Kamera relativ zu den Pipetten bewegt wird.

Bevorzugt wird das erste Teilbild gegenüber dem zweiten Teilbild überlappend dargestellt. Dies hat den Vorteil, dass eine Kontur jeder Pipette bei der Darstellung der beiden Teilbilder in überlappender Weise wieder hergestellt werden kann, wodurch die im zweiten Teilbild dargestellten Abschnitte der ersten Pipette und der zweiten Pipette gegenüber der im ersten Teilbild dargestellten Spitze der ersten Pipette und der Spitze der zweiten Pipette ausgerichtet werden können. Die Spitze der ersten Pipette und die Spitze der zweiten Pipette können als geometrische Bezugspunkte zur Volumenbestimmung von Volumina von Fluiden in den Pipetten verwendet werden. Sofern die zur Bildaufnahme verwendete Kamera eine sich automatisch den Bildverhältnissen anpassbare Brennweite (Autofocus) aufweist, kann durch die Aufnahme des ersten Teilbildes und des zweiten Teilbildes sichergestellt werden, dass die erste, zweite und dritte Grenzlinie mit optimalem Brennpunkt der Kamera aufgenommen werden, sodass das erste Teilbild und das zweite Teilbild jeweils ausreichend scharf abgebildet ist, um eine Auswertung, ob die Grenzlinien auf Höhe der Markierung liegen, mit ausreichender Genauigkeit zu gewährleisten. An dieser Stelle wird auf die Offenbarung in der deutschen Patentanmeldung der Anmelderin der vorliegenden Anmeldung mit dem Aktenzeichen DE 10 2011 117 310.6 und dem internen Aktenzeichen AES 80204 auf Beschreibungsseite 9, 13, 21-23 und in den Figuren 5 und 6 verwiesen, in der ein aus Teilbildern zusammengesetztes aufgenommenes Bild von lediglich einer Pipette beschrieben ist und die durch Bezugnahme als Offenbarung in die vorliegende Anmeldung mit aufgenommen wird.

Wie oben bereits ausgeführt, kann dem aufgenommenen Bild ein Zeitstempel zugeordnet werden, der einen der Zuordnung des Zeitstempels nachfolgenden Prozessschritt, insbesondere ein zeitgleiches Ausstoßen der ersten Probe aus der ersten Pipette und der zweiten Probe aus der zweiten Pipette, auslöst. Bei einer Zusammensetzung des aufgenommenen Bildes aus mindestens zwei Teilbildern kann dieser Zeitstempel dem zuletzt aufgenommenen Teilbild zugeordnet sein. Der der Zuordnung des Zeitstempel nachfolgende Prozessschritt kann u.a. zu unterschiedlichen Zeitpunkten auszuwertende Farbumschläge der ersten Probe in einem ersten Well und der zweiten Probe in einem zweiten Well umfassen. Zusätzlich oder alternativ kann nachfolgend der Aufnahme des aufgenommen Bildes die Kamera zur Aufnahme eines weiteren Bildes derart gedreht oder geschwenkt werden, dass auf dem weiteren Bild ein oder mehrere Wells, in dem/denen die erste Probe und/oder die zweite Probe angeordnet ist/sind, abbildbar ist/sind. Auf diese Weise kann die Kamera nicht nur zur Kontrolle des Volumens der ersten und/oder zweiten Probe verwendet werden, sondern zusätzlich oder alternativ zur Bestimmung eines Farbumschlags der ersten und/oder zweiten Probe in einem oder mehreren Wells nach Ausstoßen der ersten und/oder zweiten Probe aus der ersten und/oder zweiten Pipette.

Prinzipiell kann jede Kamera mit einer Markierung im Bildfeld der Kamera zum Durchführen des bzw. der vorbeschriebenen erfindungsgemäßen Verfahren verwendet werden. Die verwendete Kamera sollte eine zur Auswertung ausreichende Auflösung, Tiefenschärfe, Apertur und Lichtempfindlichkeit aufweisen.

Eine erfindungsgemäße Vorrichtung zur Kontrolle eines Volumens und einer Zusammensetzung einer Probe umfasst, eine erste Pipette, in der zwischen einer ersten Probe und einem an die erste Probe angrenzenden ersten Fluid eine erste Grenzfläche ausgebildet ist, die außerhalb der Pipette als im Wesentlichen horizontal verlaufende erste Grenzlinie zwischen der ersten Probe und dem ersten Fluid optisch wahrnehmbar ist, eine Kamera mit einer Markierung, die in einem Bildfeld der Kamera derart angeordnet ist, dass die Markierung und ein erster Abschnitt der ersten Pipette abgebildet werden, wobei die Pipette derart zwischen einer Lichtquelle und der Kamera angeordnet ist, dass ein Spektrum von Lichtstrahlen der Lichtquelle von der Kamera aufgenommen werden kann, welche die Probe durchquert haben, und
eine Auswerteeinrichtung, welche die Markierung im aufgenommenen Bild mit der Lage der Grenzlinie vergleicht und wobei die Auswertevorrichtung zusätzliche Mittel umfasst, welche das aufgenommene Spektrum mit einem Referenzspektrum vergleicht und feststellt, ob die Zusammensetzung der Probe gemäß dem aufgenommenen Spektrum dem des Referenzspektrums entspricht.

Eine weitere Ausführungsform der erfindungsgemäße Vorrichtung zur Kontrolle des Volumens und der Zusammensetzung mindestens einer Probe umfasst eine erste Pipette, in der zwischen einer ersten Probe und einem an die erste Probe angrenzenden ersten Fluid eine erste Grenzfläche ausgebildet ist, die außerhalb der Pipette als im Wesentlichen horizontal verlaufende erste Grenzlinie zwischen der ersten Probe und dem ersten Fluid optisch wahrnehmbar ist, eine zweite Pipette, in der zwischen einer zweiten Probe und einem an die zweite Probe angrenzenden zweiten Fluid einen zweite Grenzfläche ausgebildet ist, die außerhalb der zweiten Pipette als im Wesentlichen horizontal verlaufende zweite Grenzlinie zwischen der zweiten Probe und dem zweiten Fluid optisch wahrnehmbar ist, eine Kamera mit einer Markierung, die in einem Bildfeld der Kamera derart angeordnet ist, dass die Markierung, ein erster Abschnitt der ersten Pipette und ein zweiter Abschnitt der zweiten Pipette auf einem aufgenommenen Bild abbildbar sind, und schließlich eine Auswerteeinrichtung, mit der auswertbar ist, ob in dem aufgenommenen Bild die Markierung auf Höhe zumindest einer der ersten Grenzlinie in dem ersten Abschnitt und der zweiten Grenzlinie in dem zweiten Abschnitt liegt. Die Ausführungen zum erfindungsgemäßen Verfahren treffen für diese Vorrichtung in entsprechender Weise zu.

Erfindungsgemäß ist weiter vorgesehen, dass die Pipette derart zwischen einer Lichtquelle und der Kamera angeordnet ist, dass ein Spektrum von Lichtstrahlen der Lichtquelle von der Kamera aufgenommen werden kann, welche die Probe durchquert haben. In diesem Fall umfasst die Auswerteeinrichtung, welche die Markierung im aufgenommenen Bild mit der Lage der Grenzlinie vergleicht, zusätzliche Mittel, welche das aufgenommene Spektrum mit einem Referenzspektrum vergleicht und feststellt, ob die Zusammensetzung der Probe gemäß dem aufgenommenen Spektrum dem des Referenzspektrums entspricht.

Bei der erfindungsgemäße Vorrichtung zur Kontrolle des Volumens und der Zusammensetzung mindestens einer Probe kann/können die Pipette(n) derart zwischen einer Lichtquelle und der Kamera angeordnet, dass ein Spektrum von Lichtstrahlen der Lichtquelle von der Kamera aufgenommen werden kann, die einen Meniskus der Probe(n) durchquert haben, der an einem Rand der Grenzfläche zu einer Innenwand der Pipette(n) ausgebildet ist, und die Auswertevorrichtung kann zusätzliche Mittel umfassen, welche das/die aufgenommene(n) Spektrum/Spektren mit einem/mehreren Referenzspektrum/Referenzspektren vergleicht und feststellt, ob die Zusammensetzung der Probe(n) gemäß dem/den aufgenommenen Spektrum/Spektren dem/den des/der Referenzspektrums/Referenzspektren entspricht.

Bei der erfindungsgemäße Vorrichtung zur Kontrolle des Volumens und der Zusammensetzung mindestens einer Probe kann die Auswertevorrichtung zusätzliche Mittel umfassen, welche das/die aufgenommen Spektrum/Spektren mit einem/mehreren Referenzspektrum/Referenzspektren vergleicht und feststellt, ob in der/den Probe(n) hämolytische und/oder lipämische Faktoren vorhanden sind.

Bevorzugt ist auf dem aufgenommenen Bild die Markierung zwischen dem ersten Abschnitt der ersten Pipette und dem zweiten Abschnitt der zweiten Pipette angeordnet. Auf diese Weise wird der Abstand zwischen der Markierung und dem äußeren, der Markierung zugewandten Ende der gegebenenfalls abgebildeten ersten Grenzlinie und der Abstand zwischen der Markierung und dem äußeren, der Markierung zugewandten Ende der gegebenenfalls abgebildeten zweiten Grenzlinie minimiert. Auf diese Weise kann die Auswertung, ob die Markierung auf Höhe der ersten Grenzlinie liegt, mit gleicher oder ähnlich hoher Genauigkeit vorgenommen werden, wie die Kontrolle, ob die Markierung auf Höhe der zweiten Grenzlinie liegt. Zudem ist es von Vorteil, wenn die Markierung in einer Längsrichtung der Symmetrieachsen beider Pipetten und zusätzlich oder alternativ in einer zu dieser Längsrichtung senkrecht stehenden Richtung mittig oder im Wesentlichen mittig zwischen den der Markierung zugewandten Enden der ersten und zweiten Grenzlinien angeordnet ist.

Die erste Probe liegt vorteilhafterweise als Analyseprobe und die zweite Probe als Vergleichsprobe zum Vergleich mit der Analyseprobe vor. Auch ist möglich, dass die zweite Probe als Blindprobe vorliegt.

Schließlich ist in bevorzugter Ausführung vorgesehen, dass die erfindungsgemäße Vorrichtung von einem Analysegerät zum Untersuchen von biologischen oder chemischen Proben mittels einer über eine Pipette zugeführten Reagenzflüssigkeit umfasst ist. Als Analysegerät kommt beispielsweise die in DE 10 2008 022 835 B3 beschriebene Vorrichtung oder jeweils eine der in den parallelen deutschen Patentanmeldungen der Anmelderin der vorliegenden Anmeldung mit Aktenzeichen DE 10 2011 117 311.4 und dem internem Aktenzeichen AES 80205 und dem Aktenzeichen DE 10 2011 117 320.3 und dem internen Aktenzeichen AES 80206 beschriebene Vorrichtung in Betracht, die durch Bezugnahme als Offenbarung in die vorliegende Anmeldung mit aufgenommen werden.

Die erfindungsgemäße Vorrichtung und/oder das erfindungsgemäße Analysegerät und/oder das erfindungsgemäße Verfahren können/kann eingesetzt werden um einen oder mehrere Wells beispielsweise einer Mikrotiterplatte in einem weiteren Bild aufzunehmen und die weitere aufgenommene Bildinformation, beispielsweise eines oder mehrerer Farbumschläge einer oder mehrerer Proben in einem oder mehreren Wells, auszuwerten. Die Bildaufnahme kann erfindungsgemäß dadurch erfolgen, dass die Kamera nach der Aufnahme des aufgenommenen Bildes von den Abschnitten der Pipette weg, beispielsweise um im Wesentlichen 90 Grad, in Richtung des oder der Wells gedreht oder geschwenkt wird. In einer Ausführungsform ist die Kamera zur Aufnahme des Bildes von den Abschnitten der Pipette vertikal auf die Pipetten und nach dieser Bildaufnahme horizontal auf einen oder mehrere unterhalb der Kamera angeordnete Wells gerichtet. Entsprechende Vorrichtungen und Verfahren zur Bildaufnahme und Auswertung eines aufgenommenen Bildes von einem oder mehreren Wells bzw. einer oder mehreren Proben, die in einen oder mehrere Wells aufgenommen sind, bei denen die erfindungsgemäße Vorrichtung und/oder das erfindungsgemäße Analysegerät und/oder das erfindungsgemäße Verfahren eingesetzt werden kann/können, sind in den parallelen deutschen Patentanmeldungen der Anmelderin der vorliegenden Anmeldung mit dem Aktenzeichen DE 10 2011 117 311.4 mit dem internen Aktenzeichen AES 80205 und DE 10 2011 117 320.3 mit dem internen Aktenzeichen AES 80206 beschrieben, die jeweils durch Bezugnahme als Offenbarung in die vorliegende Anmeldung mit aufgenommen werden.

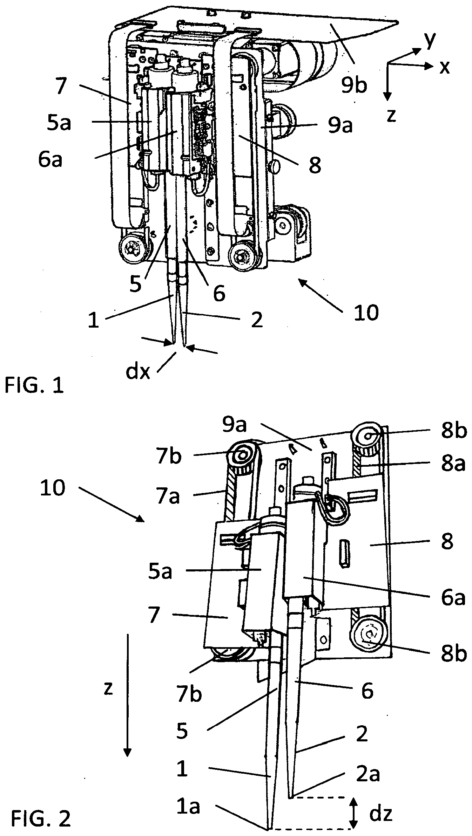

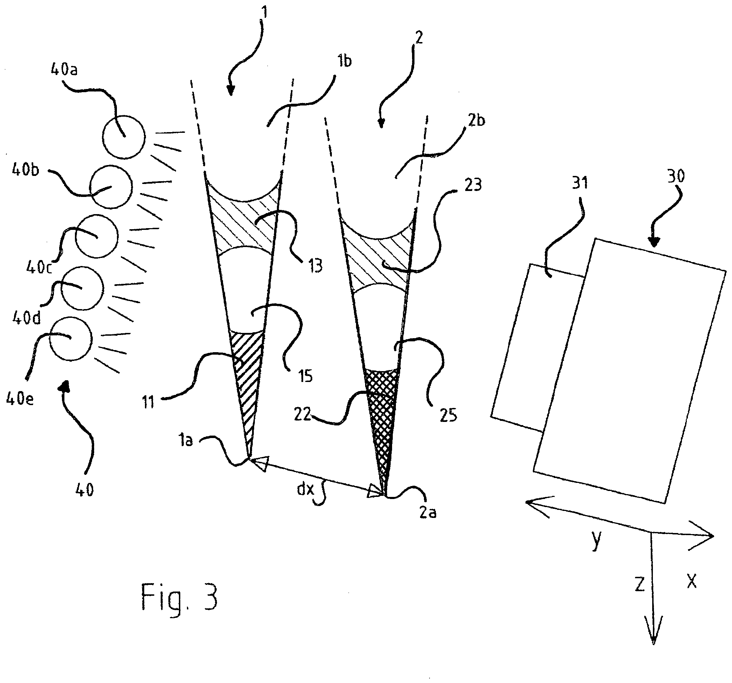

Weitere Ausführungsbeispiele sowie Vorteile der Erfindung werden nachfolgend anhand der Figuren erläutert. Zur besseren Anschaulichkeit wird in den Figuren 3 bis 5 auf eine maßstabs-/ oder proportionsgetreue Darstellung verzichtet. Die Figuren 1 und 2 sind proportionsgetreu dargestellt. In den Figuren bezeichnen, sofern nicht anders angegeben, gleiche Bezugszeichen gleiche Teile mit gleicher Bedeutung. Es zeigen:
FIG. 1 eine dreidimensionale schematische Darstellung eines Doppelpipettiermoduls,
FIG. 2 eine weitere dreidimensionale Darstellung eines Doppelpipettiermoduls mit gegeneinander versetzten Pipetten in einer Längsrichtung beider Pipetten,
FIG. 3 eine erfindungsgemäße Anordnung aus zwei Pipetten, die zwischen einer Lichtquelle und einer Kamera angeordnet sind,
FIG. 4 eine schematische Darstellung eines aus zwei Teilbildern zusammengesetzten Bildes von zwei mit Fluiden befüllten Pipetten, und
FIG. 5 die erfindungsgemäße Vorrichtung, wobei drei Pipetten zwischen einer Lichtquelle und einer Kamera angeordnet sind.

In FIG. 1 ist schematisch ein Doppelpipettiermodul 10 dargestellt mit einer ersten Pipette 1 und einer zweiten Pipette 2, deren Spitzen voneinander einen Abstand dx in einer X-Richtung aufweisen. Die Pipette 1 ist von einem ersten Pipettenträger 5 und die Pipette 2 von einem zweitenPipettenträger 6 aufgenommen, wobei die Pipettenträger 5, 6 und die Pipetten 1, 2 zueinander parallel in einer Z-Richtung, die der Längsrichtung jeder der beiden Pipetten 1, 2 entspricht, ausgerichtet sind. Der erste Pipetten-träger 5 der ersten Pipette 1 ist über ein erstes Halteelement 5a auf einer ersten Halteplatte 7 angebracht. In entsprechender Weise ist der zweite Pipettenträger 6 der zweiten Pipette 2 über ein zweites Halteelement 6a auf einer zweiten Halteplatte 8 angebracht. Die erste Halteplatte 7 und die zweite Halteplatte 8 sind gemeinsam auf einer Trägerplatte 9a angeordnet, wobei die erste Halteplatte 7 zum Halten der ersten Pipette 1 und die zweite Halteplatte 8 zum Halten der zweiten Pipette 2 in Z-Richtung gegeneinander und gegenüber der Trägerplatte 9 verschiebbar sind. Die Trägerplatte 9a ist an einem Grundträger 9b angebracht, der in X-Richtung und/oder Y-Richtung bewegt werden kann. Das in FIG. 1 dargestellte Doppelpipettiermodul kann als Teil eines Robotermanipulators ausgeführt sein. Durch die Verfahrbarkeit des Grundträgers 9b in der X- und/oder Y-Richtung und der Verfahrbarkeit der Pipetten 1, 2 in Z-Richtung können die Pipetten 1, 2 in einem begrenzten Raum beliebig dreidimensional bewegt werden. Beispielsweise kann das Doppelpipettiermodul 10 zwischen einer Kamera und einem Leerpipettenreservoir verfahrbar ausgeführt sein. Eine Steuerung der Verfahrbewegungen des Doppelpipettiermoduls 10 kann mittels eines Computers oder PCs erfolgen.

Das Pipettenmodul 10 ist mit einem Antrieb zur Verschiebung eines Fluids innerhalb der ersten Pipette 1 relativ zur ersten Pipette 1 und mit einem weiteren Antrieb zur Verschiebung eines weiteren Fluids innerhalb der zweiten Pipette 2 relativ zu der zweiten Pipette 2 ausgestattet. Über diese Antriebe wird den Pipetten 1, 2 ein Fluid insbesondere in flüssiger Form zu- oder abgeführt. Aufgrund der getrennten Antriebe für die Pipetten 1, 2 können die Volumina der in den Pipetten 1, 2 enthaltenen Fluide, Push- und/oder Pull-Parameter, die Antriebsgeschwindigkeiten etc. gesondert für jede der beiden Pipetten 1, 2 eingestellt und gesteuert und/oder geregelt werden. Insbesondere können ein Fluid in der ersten Pipette 1, beispielsweise in Form einer Probenflüssigkeit, und ein weiteres Fluid in der zweiten Pipette 2, beispielsweise eine Reagenzflüssigkeit, zeitgleich auf unterhalb der Pipetten in Z-Richtung angeordnete Wells (nicht dargestellt) übertragen werden, wobei bei der Übertragung der Flüssigkeiten keine oder fast keine Verzögerung zwischen dem Übertrag der ersten Pipette 1 und dem Übertrag der zweiten Pipette 2 eintritt und die Probenflüssigkeit mit der Kontrollflüssigkeit nicht vermischt wird. Zudem können bei getrennten Antrieben für die erste Pipette 1 und für die zweite Pipette 2 unterschiedliche Fluidik-Parameter der Fluide in der ersten Pipette 1 und der zweiten Pipette 2 für die in den Pipetten enthaltenen Fluide gegeben sein und dennoch ein zeitgleicher Flüssigkeitsübertrag der ersten Pipette 1 und der zweiten Pipette 2 erfolgen.

In FIG. 2 ist ein weiteres Doppelpipettiermodul 10 mit in Z-Richtung gegeneinander verschobenen Pipetten 1, 2 in dargestellt. Eine erste Pipettenspitze 1a der ersten Pipette 1 ist in Z-Richtung zu einer zweiten Pipettenspitze 2a der zweiten Pipette 2 um den Wert/Betrag dz verschoben. Die Verschiebung wird erzielt dadurch, dass die erste Halteplatte 7 als Schlitten ausgeführt und an einem Riemen 7a fixiert ist, der in Z-Richtung gegenüber der Grundplatte 9a verschoben werden kann. Hierzu sind an einem oberen und unteren Ende der Trägerplatte 9a in Z-Richtung Riemenscheiben 7b angebracht, wobei eine oder beide der Riemenscheiben 7b von einem Motor, beispielsweise einem Elektromotor, angetrieben werden. In entsprechender Weise ist die zweite Pipette 2 über einen gegenüber der Grundplatte 9a verschiebbaren Riemen 8a, an dem die zweite Halteplatte 8 mit dem zweiten Pipettenträger 6 befestigt ist, in Z-Richtung über Riemenscheiben 8b verschiebbar. Die in den FIG. 1 und 2 dargestellten Doppelpipettiermodule erlauben eine genaue und kostengünstige Positionierung der Pipetten 1, 2 bei minimiertem Bauraum und mit der Möglichkeit zur Automatisierung. Bei Bedarf können die in den FIG. 1 und 2 dargestellten Doppelpipettiermodule 10 um weitere Pipetten (nicht dargestellt) und entsprechende Elemente zu deren Positionierung erweitert werden. So kann das Doppelpipettiermodul 10 beispielsweise fünf oder zehn Pipetten aufweisen, wobei eine entsprechende Anzahl an Pipettenträgern, Halteelementen und Halteplatten je Pipettiermodul vorhanden ist, die auf einer gemeinsamen Trägerplatte 9a angeordnet sind. Bei mehr als zwei Pipetten je Modul sollte anstelle eines Doppelpipettiermoduls von einem Mehrfachpipettiermodul gesprochen werden.

In FIG. 3 ist eine erfindungsgemäße Anordnung aus einer ersten Pipette 1 und einer zweiten Pipette 2 perspektivisch dargestellt, die zwischen einer Lichtquelle 40 und einer Kamera 30 mit einem Objektiv 31 in Y-Richtung angeordnet sind. Die erste Pipette 1 umfasst einen ersten Abschnitt mit einer ersten Spitze 1a und die zweite Pipette 2 umfasst einen zweiten Abschnitt mit einer zweiten Spitze 2a. Die Pipetten 1, 2 sind in Z-Richtung parallel zueinander ausgerichtet, wobei die erste Spitze 1a der ersten Pipette 1 und die zweite Spitze 2a der zweiten Pipette 2 in Z-Richtung auf gleicher oder vergleichbarer Höhe liegen. In X-Richtung, die in FIG. 3 einer Richtung in die Blattebene hinein entspricht, sind die Spitzen 1a, 2a der Pipetten 1, 2 voneinander in einem Abstand dx angeordnet. Die Y-Richtung entspricht der optischen Achse der Kamera 30 und insbesondere des Objektivs 31 der Kamera 30. Mehrere punktförmige oder quasi punktförmige Lichtquellen 40a bis 40e kommen als Lichtquelle 40 zum Einsatz. Als Lichtquellen kommen beispielsweise LED-, Gasentladungs-, LaserLichtquellen und/oder konventionelle Halogenlampen in Betracht. Anstelle mehrerer punktförmiger oder quasi punktförmiger Lichtquellen kann auch ein Flächenstrahler eingesetzt werden, sodass sichergestellt ist, dass über einen gewünschten Abschnitt der Pipetten 1, 2 in Z-Richtung eine zur Bildaufnahme ausreichende Umgebungshelligkeit vorhanden ist. In der ersten Pipette 1 ist eine erste Probe 11, die bis zur Spitze 1a der ersten Probe 1 reicht, aufgezogen, wobei die erste Probe 11 über ein erstes Fluid 15 in Form einer Gasblase, die insbesondere als Luftblase ausgestaltet sein kann, von einem zweiten Fluid 13 getrennt ist. In ähnlicher Weise ist in der zweiten Pipette 2 eine zweite Probe 22 durch ein zweites Fluid 25, das wie das erste Fluid 15 in Form einer Gasblase, insbesondere Luftblase, vorliegen kann, von einem weiteren Fluid 23 getrennt. In FIG. 3 liegen die erste Probe 11 und die zweite Probe 22 als Blut und/oder Serum und/oder Zellflüssigkeit vor. Andere Substanzen für die die erste Probe und die zweite Probe, die jeweils als biologische oder chemische Proben vorliegen können, sind möglich. Die erste Probe und die zweite Probe, die als Fluide vorliegen, bilden jeweils zu dem ersten Fluid 15 und dem zweiten Fluid 25 in Pipette 1 und in Pipette 2 Menisken als gewölbte Grenzflächen aus. Diese entstehen, wenn die als Flüssigkeit vorliegende erste Probe 11 an das als Gas vorliegende erste Fluid 15 angrenzt. Da das dritte Fluid 13 ebenfalls in flüssiger Form vorliegt und zur Gasblase des ersten Fluids 15 eine Grenzfläche ausbildet, ist die erste Probe 11 von dem dritten Fluid 13 durch die Gasblase des ersten Fluids getrennt, sodass eine Mischung zwischen der ersten Probe 11 und dem dritten Fluid 13 nicht stattfindet. In entsprechender Weise ist die zweite Probe 22 durch die Gasblase des zweiten Fluids 25 von dem weiteren Fluid 23 getrennt, sodass eine Mischung zwischen der zweiten Probe 22 und dem weiteren Fluid 23 ausgeschlossen ist. Die erste Pipette 1 weist eine konische Form mit der Spitze 1a und einem in zur Z-Richtung entgegengesetzter Richtung offenen Ende 1b auf. In entsprechender Weise weist die zweite Pipette 2 mit der Spitze 2a eine in zur Z-Richtung entgegengesetzter Richtung offenes Ende 2b auf.

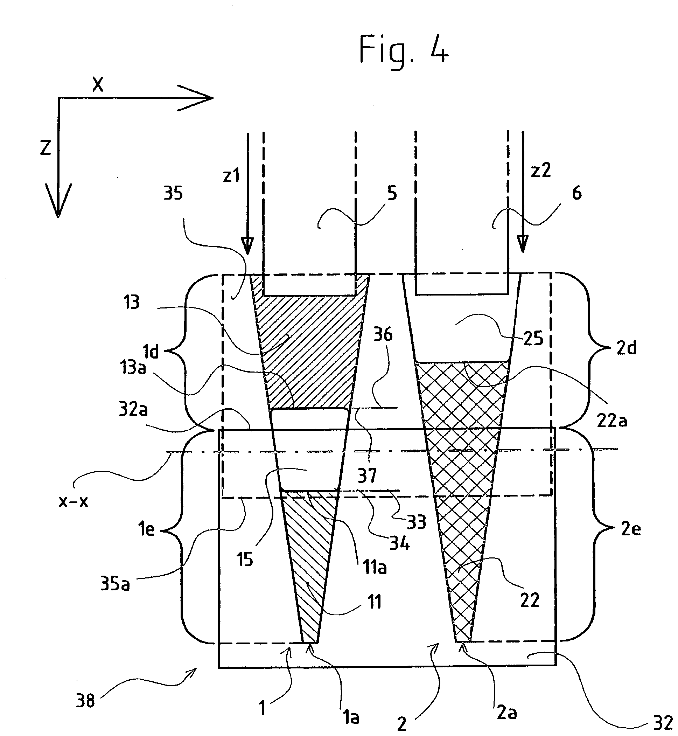

In FIG. 4 ist ein aufgenommenes Bild 38 der Kamera 30 von der ersten Pipette 1 und der zweiten Pipette 2 dargestellt, wobei in zur Z-Richtung entgegengesetzter Richtung die erste Pipette 1 mit dem ersten Pipettenträger 5 und die zweite Pipette 2 mit dem zweiten Pipettenträger 6 verbunden ist. Die Pipette 1 ist in einer Z1-Richtung und die zweite Pipette 2 in einer Z2-Richtung verschiebbar, sodass die erste Pipette 1 gegenüber der zweiten Pipette 2 und beide Pipetten in Z-Richtung oder in zur Z-Richtung entgegengesetzter Richtung verfahrbar sind. Die erste Pipette 1 umfasst die Probe 11, die zum ersten Fluid 15 in Form einer Gasblase eine Grenzfläche ausbildet, die außerhalb der Pipette 1 als im Wesentlichen horizontale Grenzlinie 11a optisch wahrnehmbar ist. Die Grenzlinie 11a ist aufgrund eines konkaven Meniskus in zur Z-Richtung entgegengesetzter Richtung an einem Rand der ersten Pipette 1 aufgewölbt, sodass eine zu einer Markierung 33 der Kamera 30 im Bildfeld der Kamera 30 gleiche Höhe in Z-Richtung vorteilhaft vorliegt, wenn die Markierung 33 in Form eines Kontrollstrichs in Z-Richtung auf gleicher Höhe liegt wie eine erste Linie 34 der Unterseite des Meniskus (gestrichelt dargestellt). In der ersten Pipette 1 ist zudem das dritte Fluid 13 aufgezogen, das eine dritte Grenzfläche 13a zum als Gasblase vorliegenden ersten Fluid 15 ausbildet, die außerhalb der Pipette als im Wesentlichen horizontale Grenzlinie 13a optisch wahrnehmbar ist. Da das dritte Fluid 13 in flüssiger Form vorliegt und das erste Fluid in gasförmiger Form vorliegt, bildet das dritte Fluid zum ersten Fluid einen konvexen Meniskus aus, sodass gegenüber einer weiteren Markierung 36, die wie die Markierung 33 als Kontrollstrich vorliegt, eine zweite Linie 37 der Oberseite des konvexen Meniskus herangezogen wird, um festzustellen, ob die dritte Grenzlinie 13a des dritten Fluids 13 auf Höhe der weiteren Markierung 36 liegt. In der Pipette 2 ist als zweites Fluid das Fluid 22 aufgezogen, das zum zweiten Fluid 25 eine Grenzfläche ausbildet, die außerhalb der zweiten Pipette 2 als im Wesentlichen horizontal ausgerichtete Grenzlinie 22a erscheint. Wie in FIG. 4 dargestellt, sind auf einem aus den Teilbildern 32, 35 zusammengesetzten aufgenommenen Bild 38 sowohl die Markierung 33 als auch die erste Grenzlinie 11a, die zweite Grenzlinie 22a und die dritte Grenzlinie 13a abgebildet. Durch eine Auswertung, ob in dem aufgenommenen Bild 38 die Markierung 33 auf Höhe zumindest einer der ersten bis dritten Grenzlinien 11a, 13a, 22a liegt, können die Volumina der ersten Probe 11, der zweiten Probe 22 und des ersten Fluids 15 kontrolliert werden. Besonders einfach ist dies für den Fall, dass die erste Probe 15 bis zur ersten Spitze 1a der ersten Pipette 1 und die zweite Probe 22 bis zur zweiten Spitze 2a der zweiten Pipette 2 reicht. In diesem Fall kann ein mittels des aufgenommenen Bildes festgestellter Abstand der Markierung 33 in Z-Richtung zur ersten Spitze 1a der ersten Pipette 1 und/oder zur zweiten Spitze 2a der zweiten Pipette 2 dazu verwendet werden, die Volumina der ersten Probe 11 und/oder der zweiten Probe 22 und/oder des ersten Fluids zu bestimmen. Insofern werden die Spitzen 1a, 2a der ersten Pipette 1 und der zweiten Pipette 2 als Bezugspunkte zur Ermittlung eines Absolutabstandes der ersten Spitze 1a der ersten Pipette 1 zur ersten Grenzlinie 11a und zur dritten Grenzlinie 13a und der zweiten Pipette 2 zur zweiten Grenzlinie 22a bei Vorliegen eines aufgenommenen Bildes verwendet. Wenn die erste Pipette 1 und/oder die zweite Pipette 2 derart geeicht ist, dass bei Liegen der Markierung 33 auf Höhe der ersten Grenzlinie 11a und/oder der zweiten Grenzlinie 22a ein vorbestimmtes Volumen der ersten Probe 11 und/oder der zweiten Probe 22 vorliegt, ist es möglich, mit lediglich einem aufgenommenen Bild 38 festzustellen, ob ein vorbestimmtes Volumen der ersten Probe 11 und/oder der zweiten Probe 22 vorliegt. Sofern keine Grenzlinie in dem aufgenommenen Bild 38 abgebildet ist, können aufgenommenen Abschnitte 1c, 1d, 2c, 2d zur Auswertung verwendet werden, ob in der ersten Pipette 1 die erste Probe 11 und/oder in der zweiten Pipette 2 die zweite Probe 22 aufgezogen ist.

Bei Orientierung der Längsrichtung der ersten Pipette 1 in Z-Richtung und Orientierung der optischen Achse des Objektivs 31 der Kamera 30 in Y-Richtung weist die von der Kamera wahrnehmbare Grenzlinie 11a einen größeren Abstand zum Objektiv 31 auf als die von der Kamera 30 wahrnehmbare dritte Grenzlinie 13a aufgrund der konischen Form der ersten Pipette 1. Bei beispielsweise nicht ausreichender Tiefenschärfe der Kamera 30 können eine der ersten 11a, zweiten 22a und dritten 13a Grenzlinien die dritte Grenzlinie 13a oder sogar zwei dieser Grenzlinien gegenüber einer der Grenzlinien auf dem aufgenommenen Bild unscharf dargestellt sein. Bei unscharfer Darstellung der ersten Grenzlinie 11a und/oder der dritten Grenzlinie 13a kann die Auswertung, ob die Markierung 33 auf Höhe der ersten Grenzlinie 11a und/oder dritten Grenzlinie 13a liegt, erschwert werden, oder sogar unmöglich werden.

Eine erhöhte Bildqualität des aufgenommenen Bildes 28 kann erreicht werden, wenn anstelle eines aufgenommenen Bildes zwei Teilbilder 32, 35 aufgenommen werden, aus denen das aufgenommene Bild 38 zusammengesetzt wird. Auf einem ersten Teilbild 32 ist ein erster Abschnitt 1c der ersten Pipette 1 abgebildet, der die Spitze 1a der ersten Pipette 1 und die erste Grenzlinie 11a einschließt. Neben dem Abschnitt 1c umfasst das erste Teilbild 32 in X-Richtung einen weiteren Abschnitt 2c der zweiten Pipette 2 mit der zweiten Spitze 2a der zweiten Pipette 2. Auf dem zweiten Teilbild 35 ist ein dritter Abschnitt 1d der ersten Pipette 1 mit der dritten Grenzlinie 13a abgebildet. Zusätzlich umfasst das zweite Teilbild in der in FIG. 4 dargestellten Ausführungsform einen Abschnitt 2d der zweiten Pipette mit der zweiten Grenzlinie 22a. Bei Ausrichtung der ersten Spitze 1a der Pipette 1 und der zweiten Spitze 2a der Pipette 2 in X-Richtung, also gleicher Höhe in Z-Richtung, kann zur Aufteilung des aufgenommenen Bildes 38 in das erste Teilbild 32 und das zweite Teilbild 35 eine Achse X-X durch den von der Kamera detektierbaren Abschnitt der ersten Pipette gelegt werden, der von dem ersten Fluid 15 befüllt ist. Durch die Achse X-X wird die erste Pipette 1 in einen oberen Abschnitt 1d mit der dritten Grenzlinie 13a und in einen unteren Abschnitt 1c in Z-Richtung mit der ersten Grenzlinie 11a aufgeteilt. Mit Aufnahme des ersten Teilbildes 32 kann somit sichergestellt werden, dass die erste Grenzlinie 11a im Brennpunkt der Kamera 30 und/oder im Tiefenschärfebereich der Kamera 30 derart liegt, dass eine Auswertung, ob die erste Grenzlinie 11a auf Höhe der Markierung 33 liegt, aufgrund einer ausreichend hohen Bildqualität prozessstabil vorgenommen werden kann. In entsprechender Weise ist sichergestellt, dass bei dem zweiten Teilbild 35 die dritte Grenzlinie 13a im Brennpunkt der Kamera 30 oder zumindest in dessen Tiefenschärfebereich derart liegt, dass eine Auswertung, ob die dritte Grenzlinie 13a auf Höhe der Markierung 36 liegt, aufgrund ausreichender Abbildungsgüte mit hoher Prozessstabilität vorgenommen werden kann. Wie in fig. 4 dargestellt, kann auch sichergestellt werden, dass bei dem zweiten Teilbild 35 die zweite Grenzlinie 22a im Brennpunkt der Kamera 30 oder zumindest in dessen Tiefenschärfebereich für eine zur Auswertung ausreichende Bildqualität liegt.

Das erste Teilbild 32 kann mit dem zweiten Teilbild 35 nach der Zusammensetzung beider Bilder 32, 35 überlappen. Hierbei ist eine untere Kante 35a des zweiten Teilbildes 35 in Z-Richtung unterhalb einer oberen Kante 32a des ersten Teilbildes 32 in zur Z-Richtung entgegengesetzter Richtung angeordnet. Daher ist auf dem zweiten Teilbild 35, wie auf dem ersten Teilbild 32, die erste Grenzlinie 11a abgebildet. Aufgrund der durch die Überlappung des ersten Teilbilds 32 und des zweiten Teilbildes 35 überlappenden Kontur der ersten Pipette 1 kann das zweite Teilbild 35 hinsichtlich der ersten Spitze 1a der ersten Pipette 1 ausgerichtet werden. Das zweite Teilbild 35 wird zudem verwendet um anhand der Kontur der zweiten Pipette 2 das zweite Teilbild 35 auf die zweite Spitze 2a der zweiten Pipette 2 auszurichten. Bei geeichten Pipetten kann von dem Abstand der ersten Grenzlinie 11a, der zweiten Grenzlinie 22a und/oder der dritten Grenzlinie 13a zur Spitze 1a und/oder zur Spitze 2a auf das Volumen der ersten Probe 11 der zweiten Probe 22 und des ersten Fluids 13 geschlossen werden. Dem aufgenommenen Bild 38 kann ein Zeitstempel zugeordnet werden, beispielsweise der Zeitpunkt der Aufnahme des zweiten Teilbildes 35. Durch diesen Zeitstempel kann ein der Aufnahme des zweiten Bildes nachfolgender Prozessschritt ausgelöst werden. Beispielsweise können nahezu zeitgleich die erste Probe 11 und das dritte Fluid 13 in einem Well und die zweite Probe 22 in einem weiteren Well (nicht dargestellt) aus den Pipetten 1, 2 ausgestoßen werden, beispielsweise mittels des Doppelpipettiermoduls 10.

In FIG. 5 ist die erfindungsgemäße Vorrichtung in Form von drei Pipetten 1, 2, 3 dargestellt, die zwischen der Lichtquelle 40 und der Kamera 30 mit dem Objektiv 31 angeordnet sind. Anstelle mehrerer punktförmiger oder quasi punktförmiger Lichtquellen 40a bis 40e in FIG. 3 ist in FIG. 5 ein Flächenstrahler 41 als Lichtquelle 40 eingesetzt. Die erste Pipette umfasst die erste Probe 11, das erste Fluid 15 und das dritte Fluid 13, wie in den FIG. 3 und 4 dargestellt. Die zweite Pipette 2 umfasst die Probe 22, wobei diese Probe nicht bis zur Spitze der zweiten Pipette 2 reicht. In der in FIG. 5 gezeigten Ausführungsform ist auf dem aufgenommen Bild 38 zusätzlich eine dritte Pipette 3 mit der ersten Probe 11, darüber angeordnetem zweiten Fluid 25 und darüber angeordnetem weiteren Fluid 23 in zur Z-Richtung entgegengesetzter Richtung dargestellt. Bei ausreichender Beleuchtung durch den Flächenstrahler 41 und ausreichender Auflösung der Kamera 30 kann auf diese Weise das Volumen mehrerer Fluide 11, 13, 15, 13, 22, 23, 25 in einer oder in mehreren Pipetten kontrolliert werden. Das von der Kamera 30 aufgenommene Bild 38, auf dem die Pipetten 1, 2, 3 abschnittsweise dargestellt sind, wird einem als Auswerteeinrichtung 130 dienenden Computer zugeführt, der die in dem Bild 38 enthaltenen Bildinformationen auf einem Monitor 140 darstellt. Die Auswerteeinrichtung 130 kann über eine Tastatur 142 und/oder eine Maus 144 gesteuert werden. Neben der Darstellung der Pipetten 1, 2, 3 nimmt die Auswertevorrichtung auch eine Auswertung dahingehend vor, ob in dem aufgenommenen Bild 38 die Markierung 33 auf Höhe zumindest einer der ersten 11a und zweiten 22a und dritten 13a Grenzlinien liegt. Diese Information kann in Tabellenform, als binäre Information zur weiteren Verarbeitung in einem an die Auswerteeinrichtung 130 angebundenes weiteres Auswertegerät oder graphisch in Form einer Funktion 39 oder Relation dargestellt werden. Mittels einer geeigneten, auf der Auswerteeinrichtung 130 lauffähigen Software bzw. einem Computerprogramm 148, welches beispielsweise auf einer CD oder DVD 146 als Datenträger gespeichert sein kann, wird ausgewertet, ob in dem aufgenommenen Bild 38 die Markierung 33 auf Höhe zumindest einer der ersten 11a oder zweiten 22a Grenzlinien liegt. Diese Auswertung kann beispielsweise durch Vergleich der Helligkeitsverteilungen des aufgenommenen Bildes 38 mit entsprechenden Helligkeitsverteilungen von Referenzbildern erfolgen. Das Computerprogrammprodukt 148 für die Auswerteeinrichtung 130 der Vorrichtung 150 zur Kontrolle von Volumina mindestens zweier Proben dient daher, wie der Datenträger 146 mit dem darauf gespeicherten Computerprogrammprodukt 148 der Durchführung des erfindungsgemäßen Verfahrens.

## Patentansprüche

1. Verfahren zur Kontrolle eines Volumens und einer Zusammensetzung mindestens einer, insbesonders fluiden Probe(11), umfassend die Schritte:
- Bereitstellen mindestens einer Pipette (1), in der zwischen mindestens einer Probe (11) und mindestens einem an die Probe (11) angrenzenden Fluid (15) mindestens eine Grenzfläche ausgebildet wird, die außerhalb der Pipette (1) jeweils als im Wesentlichen horizontal verlaufende Grenzlinie (11a) zwischen der mindestens einenProbe (11) und dem mindestens einen Fluid (15) optisch wahrnehmbar ist,
- Anordnen mindestens einer Markierung (33) einer Kamera (30) in einem Bildfeld der Kamera (30) derart, dass die Markierung (33) und mindestens ein erster Abschnitt (1c, 1d) der mindestens einen Pipette (1) auf einem aufgenommenen Bild (38) abgebildet werden, wobei die mindestens eine Pipette (1) derart zwischen einer Lichtquelle (20, 20a-20e) und der Kamera (30) angeordnet ist, dass mindestens ein Spektrum (13) von Lichtstrahlen (22-24) der Lichtquelle (20, 20a-20e) von der Kamera (30) aufgenommen wird, welche die Probe (11) durchquert haben,
- Auswerten, ob die Markierung (33) im aufgenommenen Bild (38) mit der Lage der mindestens einen Grenzlinie (11a) in dem mindestens ersten Abschnitt (1c, 1d) übereinstimmt,
- Vergleichen des mindestens einen aufgenommenen Spektrums (13) mit mindestens einem Referenzspektrum, und
- Feststellen, ob die Zusammensetzung der mindestens einen Probe (11) gemäß dem mindestens einen aufgenommenen Spektrum (13) dem des mindestens einem Referenzspektrum entspricht.

2. Verfahren nach Anspruch 1, folgende zusätzliche Schritte umfassend:
- Bereitstellen mindestens einer zweiten Pipette (2), in der zwischen mindestens einer zweiten, insbesonders fluiden Probe (22) und mindestens einem an die mindestens zweite Probe (22) angrenzenden zweiten Fluid (25) mindestens eine zweite Grenzfläche ausgebildet wird, die außerhalb der mindestens zweiten Pipette (2) jeweils als im Wesentlichen horizontal verlaufende mindestens zweite Grenzlinie (22a) zwischen der mindestens zweiten Probe (22) und dem mindestens zweiten Fluid (25) optisch wahrnehmbar ist,
- Anordnen mindestens einer Markierung (33) einer Kamera (30) in einem Bildfeld der Kamera (30) derart, dass die mindestens eine Markierung (33), mindestens ein Abschnitt (1c, 1d) der mindestens einen Pipette (1) und mindestens ein zweiter Abschnitt (2c, 2d) der mindestens zweiten Pipette (2) auf einem aufgenommenen Bild (38) abgebildet werden, wobei die Pipetten (1, 2) derart zwischen einer Lichtquelle (20, 20a-20e) und der Kamera (30) angeordnet sind, dass mindestens ein Spektrum (13) von Lichtstrahlen (22-24) der Lichtquelle (20, 20a-20e) von der Kamera (10) aufgenommen wird, welche die Proben (11, 22) durchquert haben,
- Auswerten, ob die mindestens eine Markierung (33) im aufgenommenen Bild (38) mit der Lage zumindest einer der mindestens einen Grenzlinie (11a) in dem mindestens ersten Abschnitt (1c, 1d) und der mindestens zweiten Grenzlinie (22a) in dem mindestens zweiten Abschnitt (2c, 2d) übereinstimmt,
- Vergleichen der jeweils aufgenommenen Spektren (13) mit Referenzspektren, und
- Feststellen, ob die Zusammensetzung der Proben (11, 22) gemäß den aufgenommenen Spektren (13) der der Referenzspektren entspricht.

3. Verfahren nach Anspruch 1 oder 2, **dadurch gekennzeichnet, dass** mittels eines Vergleichs von mindestens einemaufgenommenen Spektrum (13) mit mindestens einem Referenzspektrum festgestellt wird, ob in mindestens einer Probe (11, 22) hämolytische und/oder lipämische Faktoren vorhanden sind.

4. Verfahren nach Anspruch 1 oder 2, **dadurch gekennzeichnet, dass**
- die Pipette(n) (1, 2) derart zwischen einer Lichtquelle (20, 20a-20e) und der Kamera (10) angeordnet ist/sind, dass jeweils ein Spektrum (13) von Lichtstrahlen (22-24) der Lichtquelle (20, 20a-20e) von der Kamera (10) aufgenommen wird, welche mindestens einen Meniskus der Probe(n) (11, 22) durchquert haben, der an mindestens einem Rand der Grenzfläche zu einer Innenwand der Pipette(n) (1,2) ausgebildet ist/sind,
- das mindestens eine aufgenommene Spektrum (13) mit mindestens einem Referenzspektrum verglichen wird, und
- festgestellt wird, ob die Zusammensetzung der mindestens einen Probe(n) (11, 22) gemäß dem mindestens einen aufgenommenen Spektrums (13) dem des mindestens einen Referenzspektrums entspricht.

5. Verfahren nach Anspruch 2, bei dem
- das erste Fluid (15) als Gasblase, insbesondere Luftblase, ausgebildet wird,
- in zumindest einerPipette (1), insbesonders in mindestens zwei Pipetten (1, 2) die Gasblase zwischen einer Probe (11) und einem an die Gasblase angrenzenden weiteren Fluid (13) angeordnet wird, wobei eine zwischen dem weiteren Fluid (13) und der Gasblase ausgebildete weitere Grenzfläche außerhalb der Pipette (1) als im Wesentlichen horizontal verlaufende weitere Grenzlinie (13a) zwischen dem weiteren Fluid (13) und der Gasblase optisch wahrnehmbar ist, und
- das aufgenommene Bild (38) zusammengesetzt wird aus mit der Kamera (30) aufgenommenen Teilbildern (32, 35), wobei
- auf einem ersten Teilbild (32) ein erster Abschnitt (1c) der ersten Pipette (1), der eine erste Spitze (1a) der ersten Pipette (1) und die erste Grenzlinie (11a), und einen zweiter Abschnitt (2c) der zweiten Pipette (2) mit einer zweiten Spitze (2a) der zweiten Pipette (2) einschließt, abgebildet sind, und
- auf dem zweiten Teilbild (35) ein dritter Abschnitt (1d, 2d) der zumindest einen Pipette (1) mit der weiteren Grenzlinie (13a) abgebildet ist,
- und sich die beiden Teilbilder vorzugsweise überlappen.

6. Verfahren nach Anspruch 2, bei dem
- das aufgenommene Bild (38) zusammengesetzt wird aus mit der Kamera (30) aufgenommenen Teilbildern (32, 35), wobei
- auf einem ersten Teilbild (32) ein erster Abschnitt (1c) der ersten Pipette (1), der eine erste Spitze (1a) der ersten Pipette (1) und die erste Grenzlinie (11a) einschließt, und ein zweiter Abschnitt (2c) der zweiten Pipette (2) mit einer zweiten Spitze (2a) der zweiten Pipette (2) abgebildet sind, und
- auf dem zweiten Teilbild (35) ein vierter Abschnitt (2d) der zweiten Pipette (1) mit der zweiten Grenzlinie (22a) abgebildet ist.

7. Verfahren nach Anspruch 2 bis 6, bei dem die Kamera (30) ortsfest angeordnet wird und die erste Pipette (1) und die zweite Pipette (2) durch das Bildfeld der Kamera (30) gefahren werden.

8. Verfahren nach einem der Ansprüche 2 bis 7, bei dem das erste Teilbild (32) und das zweite Teilbild (35) überlappend dargestellt werden.

9. Verfahren nach einem der vorhergehenden Ansprüche, bei dem dem aufgenommenen Bild (38) ein Zeitstempel zugeordnet wird, der einen der Zuordnung des Zeitstempels nachfolgenden Prozessschritt, insbesondere ein zeitgleiches Ausstoßen der ersten Probe (11) aus der ersten Pipette (1) und der zweiten Probe (22) aus der zweiten Pipette (2), auslöst.

10. Verwendung einer Kamera (30) mit einer Markierung (33) im Bildfeld der Kamera (30) zum Durchführen eines Verfahrens nach einem der Ansprüche 1 bis 6.

11. Vorrichtung (150) zur Kontrolle des Volumens und einer Zusammensetzung mindestens einer Probe (11), umfassend
- eine erste Pipette (1), in der zwischen einer ersten Probe (11) und einem an die erste Probe (11) angrenzenden ersten Fluid (15) eine erste Grenzfläche ausgebildet ist, die außerhalb der Pipette (1) als im Wesentlichen horizontal verlaufende erste Grenzlinie (11a) zwischen der ersten Probe (11) und dem ersten Fluid (15) optisch wahrnehmbar ist,
- eine Kamera (30) mit einer Markierung (33), die in einem Bildfeld der Kamera (30) derart angeordnet ist, dass die Markierung (33) und ein erster Abschnitt (1c, 1d) der ersten Pipette (1)abgebildet werden, wobei die Pipette (1) derart zwischen einer Lichtquelle (20, 20a-20e) und der Kamera (10) angeordnet ist, dass ein Spektrum (13) von Lichtstrahlen (22-24) der Lichtquelle (20, 20a-20e) von der Kamera (10) aufgenommen werden kann, welche die Probe (11) durchquert haben, und
- eine Auswerteeinrichtung (130), welche die Markierung (33) im aufgenommenen Bild mit der Lage der Grenzlinie (11a) vergleicht und wobei die Auswertevorrichtung (130) zusätzliche Mittel umfasst, welche das aufgenommene Spektrum (13) mit einem Referenzspektrum vergleicht und feststellt, ob die Zusammensetzung der Probe (11) gemäß dem aufgenommenen Spektrum (13) dem des Referenzspektrums entspricht.

12. Vorrichtung nach Anspruch 11, zusätzlich umfassend
- eine zweite Pipette (2), in der zwischen einer zweiten Probe (22) und einem an die zweite Probe (22) angrenzenden zweiten Fluid (25) eine zweite Grenzfläche ausgebildet ist, die außerhalb der zweiten Pipette (2) als im Wesentlichen horizontal verlaufende zweite Grenzlinie (22a) zwischen der zweiten Probe (22) und dem zweiten Fluid (25) optisch wahrnehmbar ist,
- eine Kamera (30) mit einer Markierung (33), die in einem Bildfeld der Kamera (30) derart angeordnet ist, dass die Markierung (33), ein erster Abschnitt (1c, 1d) der ersten Pipette (1) und ein zweiter Abschnitt (2c, 2d) der zweiten Pipette (2) auf einem aufgenommenen Bild (38) abgebildet werden, wobei die Pipetten (1, 2) derart zwischen einer Lichtquelle (20, 20a-20e) und der Kamera (30) angeordnet sind, dass ein Spektrum (13) von Lichtstrahlen (22-24) der Lichtquelle (20, 20a-20e) von der Kamera (30) aufgenommen werden kann, welche die Proben (11, 22) durchquert haben, und
- eine Auswerteeinrichtung (130), welche die Markierung (33) im aufgenommenen Bild (38) mit der Lage zumindest einer der ersten Grenzlinie (11a) in dem ersten Abschnitt (1c, 1d) und der zweiten Grenzlinie (22a) in dem zweiten Abschnitt (2c, 2d) vergleicht und wobei die Auswertevorrichtung (130) zusätzliche Mittel umfasst, welche die aufgenommenen Spektren (13) mit Referenzspektren vergleicht und feststellt, ob die Zusammensetzung der Proben (11, 22) gemäß den aufgenommenen Spektren (13) den der Referenzspektren entspricht.

13. Vorrichtung (150) nach Anspruch 11 oder 12, bei der die Pipette(n) (11, 22) derart zwischen einer Lichtquelle (20, 20a-20e) und der Kamera (30) angeordnet ist/sind, dass ein Spektrum (13) von Lichtstrahlen (22-24) der Lichtquelle (20, 20a-20e) von der Kamera (30) aufgenommen werden kann,
die einen Meniskus der Probe(n) (11, 22) durchquert haben, der an einem Rand der Grenzfläche zu einer Innenwand der Pipette(n) (1, 2) ausgebildet ist, und
die Auswertevorrichtung (130) zusätzliche Mittel umfasst, welche das/die aufgenommene(n) Spektrum/Spektren (13) mit einem/mehreren Referenzspektrum/Referenzspektren vergleicht und feststellt, ob die Zusammensetzung der Probe(n) (11, 22) gemäß dem/den aufgenommenen Spektrum/Spektren (13) dem/den des/der Referenzspektrums/Referenzspektren entspricht.

14. Vorrichtung (150) nach einem der vorhergehenden Ansprüche, **dadurch gekennzeichnet, dass** die Auswertevorrichtung (130) zusätzliche Mittel umfasst, welche das/die aufgenommen Spektrum/Spektren (13) mit einem/mehreren Referenzspektrum/Referenzspektren vergleicht und feststellt, ob in der/den Probe(n) (11, 22) hämolytische und/oder lipämische Faktoren vorhanden sind.

15. Analysegerät zum Untersuchen von biologischen oder chemischen Proben (11, 22) mittels einer über eine Pipette zugeführten Reagenzflüssigkeit mit einer Vorrichtung (150) nach einem der Ansprüche 11 bis 1 14.

## Claims

1. A method for inspecting a volume and a composition of at least one, especially fluid, sample (11), comprising the steps of:
- making available at least one pipette (1), in which at least one interface is formed between at least one sample (11) and at least one fluid (15) which is adjacent to the sample (11), said interface being optically perceptible outside the pipette (1) in each case as an interface line (11a) between the at least one sample (11) and the at least one fluid (15) that extends essentially horizontally;
- arranging at least one marking (33) of a camera (30) in an image field of the camera (30) such that the marking (33) and at least one first section (1c, 1d) of the at least one pipette (1) are shown in a recorded image (38), the at least one pipette (1) being arranged between a light source (20, 20a-20e) and the camera (30) such that at least one spectrum (13) of light beams (22-24) of the light source (20, 20a-20e) is recorded by the camera (30), which light beams have penetrated the sample (11);
- evaluating whether the marking (33) in the recorded image (38) matches the position of the at least one interface line (11a) in the at least first section (1c, 1d);
- comparing the at least one recorded spectrum (13) with at least one reference spectrum; and
- determining whether the composition of the at least one sample (11) according to the at least one recorded spectrum (13) corresponds to that of the at least one reference spectrum.

2. The method according to claim 1, comprising the additional steps of:
- making available at least one second pipette (2), in which at least one second interface is formed between at least one second, especially fluid, sample (22) and at least one second fluid (25) which is adjacent to the at least second sample (22), said interface being optically perceptible outside the at least second pipette (2) in each case as an at least second interface line (22a) between the at least second sample (22) and the at least second fluid (25) that extends essentially horizontally;
- arranging at least one marking (33) of a camera (30) in an image field of the camera (30) such that the at least one marking (33), at least one section (1c, 1d) of the at least one pipette (1) and at least one second section (2c, 2d) of the at least second pipette (2) are shown in a recorded image (38), the pipettes (1, 2) being arranged between a light source (20, 20a-20e) and the camera (30) such that at least one spectrum (13) of light beams (22-24) of the light source (20, 20a-20e) is recorded by the camera (10), which light beams have penetrated the samples (11, 22);
- evaluating whether the at least one marking (33) in the recorded image (38) matches the position of at least one of the at least one interface line (11a) in the at least first section (1c, 1d) and the at least second interface line (22a) in the at least second section (2c, 2d);
- comparing the recorded spectra (13) in each case with reference spectra; and
- determining whether the composition of the samples (11, 22) according to the recorded spectra (13) corresponds to that of the reference spectra.

3. The method according to claim 1 or 2, **characterized in that** it is determined by comparing at least one recorded spectrum (13) with at least one reference spectrum, whether haemolytic and/or lipemic factors are present in at least one sample (11, 22) .

4. The method according to claim 1 or 2, **characterized in that**
- the pipette (s) (1, 2) is/are arranged between a light source (20, 20a-20e) and the camera (10) such that one spectrum (13) of light beams (22-24) of the light source (20, 20a-20e) is recorded by the camera (10) in each case, which light beams have penetrated at least one meniscus of the sample (s) (11, 22) which meniscus/menisci is/are formed at at least one edge of the interface with an inner wall of the pipette(s) (1, 2),
- the at least one recorded spectrum (13) is compared with at least one reference spectrum; and
- it is determined whether the composition of the at least one sample (s) (11, 22) according to the at least one recorded spectrum (13) corresponds to that of the at least one reference spectrum.

5. The method according to claim 2, wherein
- the first fluid (15) is formed as a gas bubble, especially air bubble;
- in at least one pipette (1), especially in at least two pipettes (1, 2), the gas bubble is arranged between a sample (11) and a further fluid (13) which is adjacent to the gas bubble, a further interface formed between the further fluid (13) and the gas bubble being optically perceptible outside the pipette (1) as an interface line (13a) between the further fluid (13) and the gas bubble that extends essentially horizontally;
- the recorded image (38) is composed of partial images (32, 35) recorded with the camera (30); wherein
- on a first partial image (32), a first section (1c) of the first pipette (1) that includes a first tip (1a) of the first pipette (1) and the first interface line (11a), and a second section (2c) of the second pipette (2) with a second tip (2a) of the second pipette (2) are shown; and
- on the second partial image (35), a third section (1d, 2d) of the at least one pipette (1) is shown with the further interface line (13a);
- and the two partial images preferably overlap.

6. The method according to claim 2, wherein
- the recorded image (38) is composed of partial images (32, 35) recorded with the camera (30); wherein
- on a first partial image (32), a first section (1c) of the first pipette (1) that includes a first tip (1a) of the first pipette (1) and the first interface line (11a), and a second section (2c) of the second pipette (2) with a second tip (2a) of the second pipette (2) are shown; and
- on the second partial image (35), a fourth section (2d) of the second pipette (1) is shown with the second interface line (22a) .

7. The method according to claim 2 to 6, wherein the camera (30) is arranged stationary, and the first pipette (1) and the second pipette (2) are moved through the image field of the camera (30) .

8. The method according to any one of claims 2 to 7, wherein the first partial image (32) and the second partial image (35) are illustrated to be overlapping.

9. The method according to any one of the preceding claims, wherein a time stamp is assigned to the recorded image (38), said time stamp triggering a process step subsequent to the assignment of the time stamp, especially simultaneously ejecting the first sample (11) from the first pipette (1) and the second sample (22) from the second pipette (2).

10. Use of a camera (30) with a marking (33) in the image field of the camera (30) for carrying out a method according to any one of claims 1 to 6.

11. A device (150) for inspecting the volume and a composition of at least one sample (11), comprising
- a first pipette (1), in which a first interface is formed between a first sample (11) and a fluid (15) which is adjacent to the sample (11), said interface being optically perceptible outside the pipette (1) as first interface line (11a) between the first sample (11) and the first fluid (15) that extends essentially horizontally;
- a camera (30) with a marking (33) arranged in an image field of the camera (30) such that the marking (33) and a first section (1c, 1d) of the first pipette (1) are shown, the pipette (1) being arranged between a light source (20, 20a-20e) and the camera (10) such that a spectrum (13) of light beams (22-24) of the light source (20, 20a-20e) can be recorded by the camera (10), which light beams have penetrated the sample (11); and
- an evaluation unit (130) comparing the marking (33) in the recorded image with the position of the interface line (11a) and wherein the evaluation unit (130) comprises additional means which compares the recorded spectrum (13) with a reference spectrum and determines whether the composition of the sample (11) according to the recorded spectrum (13) corresponds to that of the reference spectrum.

12. The device according to claim 11, additionally comprising:
- a second pipette (2), in which a second interface is formed between a second sample (22) and a second fluid (25) which is adjacent to the second sample (22), said interface being optically perceptible outside the second pipette (2) as a second interface line (22a) between the second sample (22) and the second fluid (25) that extends essentially horizontally;
- a camera (30) with a marking (33) arranged in an image field of the camera (30) such that the marking (33), a first section (1c, 1d) of the first pipette (1) and a second section (2c, 2d) of the second pipette (2) are shown on a recorded image (38), the pipettes (1, 2) being arranged between a light source (20, 20a-20e) and the camera (30) such that a spectrum (13) of light beams (22-24) of the light source (20, 20a-20e) can be recorded by the camera (30), which light beams have penetrated the samples (11, 22); and
- an evaluation unit (130) comparing the marking (33) in the recorded image (38) with the position of at least one of the first interface line (11a) in the first section (1c, 1d) and the second interface line (22a) in the second section (2c, 2d) and wherein the evaluation unit (130) comprises additional means which compares the recorded spectra (13) with reference spectra and determines whether the composition of the samples (11, 12) according to the recorded spectra (13) corresponds to that of the reference spectra.

13. The device (150) according to claim 11 or 12, wherein the pipette(s) (11, 22) is/are arranged between a light source (20, 20a-20e) and the camera (30) such that a spectrum (13) of light beams (22-24) of the light source (20, 20a-20e) can be recorded by the camera (30), which light beams have penetrated a meniscus of the sample (s) (11, 22) which meniscus is formed at an edge of the interface with an inner wall of the pipette (s) (1, 2); and
the evaluation unit (130) comprises additional means which compare the recorded spectrum/spectra (13) with one or more reference spectrum/spectra and determine whether the composition of the sample (s) (11, 22) according to the recorded spectrum/spectra (13) corresponds to that of the reference spectrum/spectra.

14. The device (150) according to any one of the preceding claims, **characterized in that** the evaluation unit (130) comprises additional means which compares the recorded spectrum/spectra (13) with one or more reference spectrum/spectra and determines whether haemolytic and/or lipemic factors are present in the sample(s) (11, 22).

15. An analyzer for testing biological or chemical samples (11, 22) by means of a reagent liquid supplied with a pipette using a device (150) according to any one of claims 1 to 14.

## Revendications

1. Procédé pour le contrôle d'un volume et d'une composition d'au moins un échantillon (11) en particulier fluide, comprenant les étapes :
- de mise à disposition d'au moins une pipette (1), dans laquelle entre au moins un échantillon (11) et au moins un fluide (15) adjacent à l'échantillon (11) au moins une surface de séparation est réalisée, qui est optiquement perceptible à l'extérieur de la pipette (1) respectivement en tant que ligne de séparation (11a) s'étendant pour l'essentiel horizontalement entre l'au moins un échantillon (11) et l'au moins un fluide (15),
- d'agencement d'au moins une marque (33) d'une caméra (30) dans un champ visuel de la caméra (30) de telle sorte que la marque (33) et l'au moins une première section (le, 1d) de l'au moins une pipette (1) sont représentées sur une image enregistrée (38), dans lequel l'au moins une pipette (1) est disposée entre une source de lumière (20, 20a-20e) et la caméra (30) de telle sorte qu'au moins un spectre (13) de rayons de lumière (22-24) de la source de lumière (20, 20a-20e) est enregistré par la caméra (30), lesquels ont traversé l'échantillon (11),
- d'évaluation si la marque (33) dans l'image enregistrée (38) coïncide avec la position de l'au moins une ligne de séparation (11a) dans l'au moins une première section (le, 1d),
- de comparaison de l'au moins un spectre (13) enregistré avec au moins un spectre de référence, et
- de constatation si la composition de l'au moins un échantillon (11) selon l'au moins un spectre (13) enregistré correspond à celle de l'au moins un spectre de référence.

2. Procédé selon la revendication 1, comprenant les étapes supplémentaires suivantes :
- mise à disposition d'au moins une deuxième pipette (2) dans l'au moins un deuxième échantillon en particulier fluide (22) et au moins un deuxième fluide (25) adjacent à l'au moins deuxième échantillon (22) une deuxième surface de séparation est réalisée, qui est optiquement perceptible à l'extérieur de l'au moins une deuxième pipette (2) respectivement en tant que seconde ligne de séparation (22a) s'étendant pour l'essentiel horizontalement entre l'au moins deuxième échantillon (22) et l'au moins deuxième fluide (25),
- disposition d'au moins une marque (33) d'une caméra (30) dans un champ visuel de la caméra (30) de telle sorte que l'au moins une marque (33), au moins une section (le, 1d) de l'au moins une pipette (1) et au moins une deuxième section (2c, 2d) de l'au moins une deuxième pipette (2) sont représentées sur une image enregistrée (38), dans lequel les pipettes (1, 2) sont disposées de telle sorte que, entre une source de lumière (20, 20a-20e) et la caméra (30), au moins un spectre (13) de rayons de lumière (22-24) de la source de lumière (20, 20a-20e) est enregistré par la caméra (10), que les échantillons (11, 22) ont traversée,
- évaluation si l'au moins une marque (33) dans l'image enregistrée (38) coïncide avec la position d'au moins une de l'au moins une ligne de séparation (11a) dans l'au moins une première section (le, 1d) et l'au moins une seconde ligne de séparation (22a) dans l'au moins une deuxième section (2c, 2d),
- comparaison des spectres (13) respectivement enregistrés avec des spectres de référence, et
- constatation si la composition des échantillons (11, 22) selon les spectres (13) enregistrés correspond à celle des spectres de référence.

3. Procédé selon la revendication 1 ou 2, **caractérisé en ce que**, au moyen d'une comparaison d'au moins un spectre (13) enregistré avec au moins un spectre de référence il est constaté si des facteurs hémolytiques et/ou lipémiques sont présents dans au moins un échantillon (11, 22).

4. Procédé selon la revendication 1 ou 2, **caractérisé en ce que**
- la ou les pipettes (1, 2) sont disposées entre une source de lumière (20, 20a-20e) et la caméra (10) de telle sorte que respectivement un spectre (13) de rayons de lumière (22-24) de la source de lumière (20, 20a-20e) est enregistré par la caméra (10) qui ont traversé a moins un ménisque du ou des échantillons (11, 22), qui est réalisé au niveau d'au moins un bord de la surface de séparation pour une paroi interne de la ou des pipettes (1, 2),
- l'au moins un spectre (13) enregistré est comparé à au moins un spectre de référence, et
- il est constaté si la composition de l'au moins un échantillon (11, 22) selon l'au moins un spectre (13) enregistré correspond à celle de l'au moins un spectre de référence.

5. Procédé selon la revendication 2, dans lequel
- le premier fluide (15) est réalisé en tant que bulle de gaz, en particulier bulle d'air,
- dans au moins une pipette (1), en particulier dans au moins deux pipettes (1, 2) la bulle de gaz est disposée entre un échantillon (11) et un autre fluide (13) adjacent à la bulle de gaz, dans lequel une autre surface de séparation en dehors de la pipette (1) réalisée entre l'autre fluide (13) et la bulle de gaz est optiquement perceptible en tant qu'autre ligne de séparation (13a) s'étendant pour l'essentiel horizontalement entre l'autre fluide (13) et la bulle de gaz, et
- l'image enregistrée (38) est composée à partir d'images partielles (32, 35) enregistrées avec la caméra (30), dans lequel
- sur une première image partielle (32) une première section (1c) de la première pipette (1) qui englobe un premier sommet (1a) de la première pipette (1) et la première ligne de séparation (11a) et une deuxième section (2c) de la deuxième pipette (2) avec un second sommet (2a) de la deuxième pipette (2), sont représentées, et
- sur la deuxième image partielle (35) une troisième section (1d, 2d) de l'au moins une pipette (1) est représentée avec l'autre ligne de séparation (13a),
- et les deux images partielles se chevauchent de préférence.

6. Procédé selon la revendication 2, dans lequel
- l'image enregistrée (38) est composée à partir d'images partielles (32, 35) enregistrées par la caméra (30), dans lequel
- sur une première image partielle (32) une première section (1c) de la première pipette (1) qui englobe un premier sommet (1a) de la première pipette (1) et la première ligne de séparation (11a), et une deuxième section (2c) de la deuxième pipette (2) sont représentées avec un deuxième sommet (2a) de la deuxième pipette (2), et
- sur la deuxième image (35) une quatrième section (2d) de la deuxième pipette (1) est représentée avec la seconde ligne de séparation (22a).

7. Procédé selon la revendication 2 à 6, dans lequel la caméra (30) est disposée à demeure et la première pipette (1) et la deuxième pipette (2) sont passées à travers le champ visuel de la caméra (30).

8. Procédé selon l'une des revendications 2 à 7, dans lequel la première image partielle (32) et la seconde image partielle (35) sont montrées en chevauchement.

9. Procédé selon l'une des revendications précédentes, dans lequel un marquage temporel est associé à l'image enregistrée (38), lequel déclenche une étape de processus à la suite de l'association du marquage temporel, en particulier une éjection simultanée du premier échantillon (11) hors de la première pipette (1) et du deuxième échantillon (22) hors de la deuxième pipette (2).

10. Utilisation d'une caméra (30) avec une marque (33) dans le champ visuel de la caméra (30) pour la réalisation d'un procédé selon l'une des revendications 1 à 6.

11. Dispositif (150) pour le contrôle du volume et d'une composition d'au moins un échantillon (11), comprenant
- une première pipette (1) dans laquelle entre un premier échantillon (11) et un premier fluide (15) adjacent au premier échantillon (11) une première surface de séparation est réalisée, qui est optiquement perceptible à l'extérieur de la pipette (1) en tant que ligne de séparation (11a) s'étendant pour l'essentiel horizontalement entre le premier échantillon (11) et le premier fluide (15),
- une caméra (30) avec une marque (33) qui est disposée dans un champ visuel de la caméra (30) de telle sorte que la marque (33) et une première section (le, 1d) de la première pipette (1) sont représentées, dans lequel la pipette (1) est disposée entre une source de lumière (20, 20a-20e) et la caméra (10) de telle sorte qu'un spectre (13) de rayons de lumière (22-24) de la source de lumière (20, 20a-20e) peut être enregistré par la caméra (10), qui ont traversé l'échantillon (11), et
- un dispositif d'analyse (130) qui compare la marque (33) dans l'image enregistrée avec la position de la ligne de séparation (11a) et dans lequel le dispositif d'analyse (130) comprend des moyens supplémentaires que le spectre (13) enregistré compare à un spectre de référence et constate si la composition de l'échantillon (11) selon le spectre (13) enregistré correspond au spectre de référence.

12. Dispositif selon la revendication 11, comprenant en outre
- une deuxième pipette (2) dans laquelle entre un deuxième échantillon (22) et un deuxième fluide (25) adjacent au deuxième échantillon (22) une deuxième surface de séparation est réalisée, qui est optiquement perceptible en dehors de la deuxième pipette (2) en tant que seconde ligne de séparation (22a) s'étendant pour l'essentiel horizontalement entre le deuxième échantillon (22) et le deuxième fluide (25),
- une caméra (30) avec une marque (33) qui est disposée dans un champ visuel de la caméra (30) de telle sorte que la marque (33), une première section (le, 1d) de la première pipette (1) et une deuxième section (2c, 2d) de la deuxième pipette (2) sont représentées sur une image enregistrée (38), dans lequel les pipettes (1, 2) sont disposées entre une source de lumière (20, 20a-20e) et la caméra (30) de telle sorte qu'un spectre (13) de rayons de lumière (22-24) de la source de lumière (20, 20a-20e) peut être enregistré par la caméra (30) que les échantillons (11, 22) ont traversée, et
- un dispositif d'analyse (130) qui compare la marque (33) dans l'image enregistrée (38) à la position d'au moins une de la première ligne de séparation (11a) dans la première section (le, 1d) et de la seconde ligne de séparation (22a) dans la deuxième section (2c, 2d) et dans lequel le dispositif d'analyse (130) comprend des moyens supplémentaires qui comparent les spectres enregistrés (13) à des spectres de référence et constatent si la composition des échantillons (11, 12) selon les spectres (13) enregistrés correspond à celles des spectres de référence.

13. Dispositif (150) selon la revendication 11 ou 12, dans lequel la ou les pipettes (11, 22) sont disposées entre une source de lumière (20, 20a-20e) et la caméra (30) de telle sorte qu'un spectre (13) de rayons de lumière (22-24) de la source de lumière (20, 20a-20e) peut être enregistré par la caméra (30), qui ont traversé un ménisque du ou des échantillons (11, 22) qui est réalisé au niveau d'un bord de la surface de séparation avec une paroi interne de la ou des pipettes (1, 2), et
le dispositif d'analyse (130) comprend des moyens supplémentaires qui comparent le ou les spectres (13) enregistrés à un ou plusieurs spectres de référence et constatent si la composition du ou des échantillons (11, 22) selon le ou les spectres (13) enregistrés correspond à celle(s) du ou des spectres de référence.

14. Dispositif (150) selon l'une des revendications précédentes, **caractérisé en ce que** le dispositif d'analyse (130) comprend des moyens supplémentaires qui comparent le ou les spectres (13) enregistrés à un ou plusieurs spectres de référence et constatent si dans le ou les échantillons (11, 22) des facteurs hémolytiques et/ou lipémiques sont présents.

15. Appareil d'analyse pour l'exploration d'échantillons biologiques ou chimiques (11, 22) au moyen d'un fluide réactif alimenté par l'intermédiaire d'une pipette avec un dispositif (150) selon l'une des revendications 1 à 14.
